# EUROPEAN PATENT SPECIFICATION

(11) **EP 4 074 179 B1**
(45) Date of publication and mention of the grant of the patent: **03.01.2024**
(21) Application number: 22168630.6
(22) Date of filing: 15.04.2022
(51) Int. Cl.: A21C 1/14, B01F 35/75

(54) **DEVICE FOR EXTRACTING A DOUGH FROM A KNEADING MACHINE AND PROCESS FOR EXTRACTING A DOUGH FROM A KNEADING MACHINE**
VORRICHTUNG ZUM EXTRAHIEREN EINES TEIGS AUS EINER KNETMASCHINE UND VERFAHREN ZUM EXTRAHIEREN EINES TEIGS AUS EINER KNETMASCHINE
DISPOSITIF D'EXTRACTION D'UNE PÂTE À PARTIR D'UNE MACHINE DE MALAXAGE ET PROCÉDÉ D'EXTRACTION D'UNE PÂTE À PARTIR D'UNE MACHINE DE MALAXAGE

(30) Priority: 16.04.2021 IT 202100009737
(43) Date of publication of application: 19.10.2022
(73) Proprietor: YTD S.r.l., 36035 Marano Vicentino (VI) (IT); Frigo, Nicola, 37038 Soave (VR) (IT)
(72) Inventor: FRIGO, Nicola, 37038 Soave (VR) (IT); GIOLO, Enrico, 35132 Padova (PD) (IT); SAVASTANO, Domenico, 30173 Mestre (VE) (IT)
(74) Representative: Gallo, Luca

(56) References cited:
- EP-A2- 0 626 326
- WO-A1-95/30610
- DE-U- 1 988 602
- GB-A- 2 123 374
- US-A- 5 186 310
- US-A- 5 635 235

## Description

### Field of application

The present invention relates to a device for extracting a dough from a kneading machine and to a process for extracting a dough from a kneading machine according to the preamble of the respective independent claims.

The subject device and process are advantageously intended to be used in the industrial or professional field, for example in the pastry, bakery, catering and gastronomy sectors in order to extract the dough from the tanks of both large and small-sized kneading machines or to move the dough at different heights of industrial production lines.

Therefore, the present invention relates to the industrial sector of the production of machinery for processing food dough, especially of the industrial or professional type, in particular for the production and handling of dough from one processing machinery to another.

### Prior art

Kneading machines for professional or industrial use are known on the market, which traditionally comprise a support frame, a containment tank, mounted on the support frame and intended to receive food raw materials to be mixed to obtain a dough, and mixing means, comprising for example hook or spiral whips, arranged inside the tank for mixing the aforementioned food raw materials. Furthermore, known kneading machines are generally provided with actuator means mounted on the support frame, mechanically connected to the mixing means and operable to set the latter in rotation.

Once the dough has been obtained, most of the kneading machines known on the market, in particular kneading machines of small dimensions, provide that the dough is manually removed from the containment tank by an operator. Such kneading machines can also possibly be arranged to disconnect and remove the containment tank from the support frame before extracting the dough, so as to facilitate the latter operation. However, large-sized professional or industrial kneading machines are also known on the market, which can reach (or even exceed) a dough capacity of 200 kg to be extracted at the end of each mixing cycle, generally with an average duration of about 20 minutes. In light of these sizes of dough to be extracted and the large dimensions of the containment tank, it is extremely long, tiring and complex in these cases to carry out the extraction operation manually.

To obviate these drawbacks, kneading machines are known on the market which are known as "extractable", provided in particular with a containment tank capable of being separated from the support frame. In particular, the mixing means of these kneading machines comprise a mixing head, on which the whisks and the actuator means are mounted, which is rotatably mounted on the support frame. The mixing head can therefore be moved between an operating position, in which it is arranged above the containment tank and a rest position, in which it is raised to remove the containment tank and extract the dough.

Generally, given the size of the containment tank, the latter is disconnected from the support frame and carried, by means of a carriage integrated with it, to an overturning device which raises and overturns it, pouring out the dough.

Alternatively, "tipper" kneading machines are also known in the market, provided in particular with an integrated lifting device, which is intended to lift and overturn, in addition to the containment tank, also the entire support frame with the mixing means and the actuator means mounted thereon.

Finally, "suspended" kneading machines are also known in the market, wherein the containment tank is arranged raised above a conveyor belt and is provided with a lower opening arranged at the conveyor belt itself. This opening is closed by a door intended to be opened at the end of mixing to unload the dough on the conveyor belt.

The known types of kneading machines briefly described up to now have proved to be not free from drawbacks in practice.

The main drawback lies in that these kneading machines are complex and have very high costs, as they must additionally provide auxiliary (for removable machines) or integrated (for tilting machines) lifting and tipping equipment, or support structures which carry the raised (for suspended machines) containment tank installed.

A further drawback of known type kneading machines lies that they must be specially designed with the means described above (lifting apparatus, containment tanks which can be separated from the support frame, conveyor belts, complex support structures, etc.). In fact, being of complex construction, it is not possible to modify and adapt them by adding these means subsequently.

A further drawback lies that these kneading machines are provided with a large footprint due, in addition to the dimensions required by the capacity of the containment tank, also to those required by the additional means necessary to carry out the dough extraction step, in particular to the lifting and overturning equipment.

This drawback is all the greater if one considers that the dimensions of the kneading machines which provide for the overturning of the containment tank or of the entire machine also require ample space for maneuver.

Furthermore, this drawback linked to the handling of large machinery generates further drawbacks linked to the safety of these kneading machines and to the slowness of the dough extraction process.

In particular, it is necessary to pay particular attention when lifting and overturning large containment tanks, as their accidental fall (for example due to a badly executed hooking on the overturning apparatus) could cause serious damage to personnel involved in operations.

Furthermore, to carry out these operations correctly and safely, it is not possible to operate quickly. This last drawback is also due to the low operating speed typical of the apparatuses that carry out the lifting and overturning of the containment tanks, having to perform high efforts.

In order to obviate the drawbacks of the aforementioned prior art, kneading machines have been developed provided with devices for extracting the dough, which can be inserted directly into the containment tank, therefore avoiding having to raise or overturn it.

For example, the German patent DE 1988602 describes a device for the extraction of a dough provided with a scraper, susceptible of being placed on the bottom of the containment tank, and an inclined conveyor belt, adjacent to the scraper, along which the dough collected by the scraper is susceptible of collected until it is taken out of the containment tank. In particular, the sliding of the dough along the scraper occurs through a rotation of the containment tank.

In particular, when the containment tank rotates, it pushes the dough against the scraper causing it to slide towards the conveyor belt.

The latter, by flowing, then carries the dough out of the containment tank.

Furthermore, patent DE 1988602 indicates that the extraction device can be realized integrated with the kneading machine or it can constitute an independent unit that can be associated with other machines that can be used in pastry.

Even this last solution has proved to be not free from drawbacks in practice.

The main drawback of the device discussed above lies in that it is not sufficiently effective in extracting the dough. In fact, in most cases the conveyor belt must be arranged with a high inclination, for example higher than 45°, with respect to the bottom of the containment tank, and therefore the friction force exerted on the dough is not sufficient to make the latter remain attached to the conveyor belt until the end of the extraction. Therefore, part of the dough risks slipping back into the containment tank, before being completely taken out of it.

This drawback is found above all in kneading machines with containment tanks of small diameter or with side walls of high height.

Furthermore, the same drawback can be found in the extraction of very viscous, dense or almost solid dough, which therefore have little adhesion to the conveyor belt.

A further drawback of the device described above resides in that its efficiency decreases as the containment tank empties.

In fact, initially the first portions of dough extracted from the containment tank are pushed in the ascent of the conveyor belt by the successive dough portions carried at the scraper by the rotation of the containment tank. Otherwise, at the end of the extraction process the last portions of dough receive only the thrust imparted by the rotation of the containment tank and do not have sufficient inertia to slide along the scraper, overtake it and reach the conveyor belt.

Therefore, the last portions of dough risk having to be extracted once again by hand.

It is also known, for example from patent US 5635235, a device for moving a dough at different heights, which is provided with a fixed support structure and a first and a second conveyor belt permanently mounted on the support structure and arranged parallel along a vertical direction. This device is placed downstream of an extruder which pushes the dough into a channel defined between the conveyor belts. In particular, the dough is poured into the extruder by a tilting kneading machine of the type described above.

Finally, in the field of handling solid bulk food products, for example from patent US 5186310, a device is known comprising a fixed support structure and a first and a second conveyor belt mounted on the support structure and arranged side by side to transport the solid food products at different heights. In particular, the first conveyor belt is fixed to the support structure while the second conveyor belt is movable with respect to the first to allow maintenance inside the channel defined between the conveyor belts.

The latter devices described are arranged in line inside food production or processing plants and are exclusively designed to move food products along the plant at different heights. However, these devices are not independent from further machinery for extracting the food product from any container in which it is found.

### Disclosure of the invention

In this situation, the problem underlying the present invention is therefore that of eliminating the drawbacks of the prior art mentioned above, by providing a device for extracting a dough from a kneading machine and a process for extracting a dough from a kneading machine which are able to increase the extraction efficiency of the dough and keep it substantially constant.

A further object of the present invention is to provide a device for extracting a dough from a kneading machine, which is versatile and able to be adapted to most of the kneading machines, both large and small, even already present on the market, and to most types of dough to be extracted.

A further object of the present invention is to provide a device for extracting a dough from a kneading machine and a process for extracting a dough from a kneading machine, which allow the time required to extract the dough to be reduced.

A further object of the present invention is to provide a device for extracting a dough from a kneading machine, which is capable of reducing the overall dimensions of the machinery and the width of the necessary maneuvering spaces.

A further object of the present invention is to provide a device for extracting a dough from a kneading machine and a process for extracting a dough from a kneading machine, which are safe and operationally completely reliable.

A further object of the present invention is to provide a device for extracting a dough from a kneading machine and a process for extracting a dough from a kneading machine, which are simple and cost-effective to make.

### Brief description of the drawings

The technical features of the invention, according to the aforesaid aims, can clearly be seen in the content of the claims below, and its advantages will become more readily apparent in the detailed description that follows, made with reference to the accompanying drawings, which illustrate a preferred embodiment, which is purely exemplary and not limiting, in which:
- Figure 1 shows a perspective view of a device for extracting a dough from a kneading machine object of the invention according to a first variant of arrangement with respect to the kneading machine;
- Figure 2 shows a front view of the device of Figure 1 in which some parts have been removed to better highlight others;
- Figure 3a shows a front view of a detail of the device of Figure 2 in a first operating configuration in which a second conveyor belt is raised with respect to a first conveyor belt;
- Figure 3b shows a front view of the device of Figure 3a in a second operating configuration, in which the second conveyor belt is lowered;
- Figures 4 and 5 show two different perspective views of the device of Figure 1;
- Figure 6 shows a perspective view of the device according to the invention in which a third conveyor belt is arranged in an open position;
- Figure 7 shows a detail of Figure 2 relating to thrust means of the device;
- Figure 8 shows a detail of Figure 2 relating to a segment of the second conveyor belt of the device;
- Figures 9a-d show four steps of a process for extracting a dough from a kneading machine object of the invention;
- Figure 10 shows a perspective view of the device object of the invention according to the first variant of arrangement with respect to the kneading machine;
- Figure 11 shows a perspective view of the device object of the invention according to a second variant of arrangement with respect to the kneading machine.

### Detailed description of an example of a preferred embodiment

With reference to the accompanying figures, reference numeral 1 indicates as a whole a device for extracting a dough P from a kneading machine 100 according to the present invention.

The present invention finds particular application in the industrial field of the production of machinery for processing food dough, whether they are of an industrial or professional type.

Of course, even if this device 1 is particularly suitable for use with large-sized kneading machines 100, it can be suitably sized and used with kneading machines 100 of smaller dimensions, possibly also of the domestic type.

Furthermore, the device 1 according to the invention can be advantageously used for moving dough P in industrial production lines, for example to bring them to different heights, between different machinery for processing dough or between different conveying lines.

In accordance with the idea underlying the present invention, the device 1 for extracting a dough P from a kneading machine 100 in question comprises a support structure 2, susceptible of being associated with a kneading machine 100.

In particular, the kneading machine 100 is provided with a containment tank 110 for containing a dough P, and is preferably of the known type. For example, the kneading machine 100 comprises a support frame 120 on which the containment tank 110 is mounted, preferably rotatably. The latter, in particular, is intended to accommodate food raw materials to be mixed to obtain the dough P and is advantageously provided with a bottom wall 111 and a peripheral wall 112 extending from the bottom wall to an upper peripheral edge 113. The upper peripheral edge 113 defines an upper opening, which is susceptible of being crossed by the food raw materials when they are inserted into the containment tank 110.

The bottom wall 111 is preferably at least partially flat and the peripheral wall 112 is preferably cylindrical. Furthermore, the containment tank 110 advantageously comprises a curved connecting portion, placed as a connection between the bottom wall 111 and the perimeter wall 112.

Advantageously, the kneading machine 100 is also provided, in a per se known manner, with mixing means 130, comprising a mixing head, mounted on the support frame 120 above the containment tank 110 and provided with at least one whisk, for example a hook or spiral whisk, arranged inside the containment tank 110 for mixing the aforementioned food raw materials and obtaining the dough P. In particular, the mixing head can be fixed (i.e. always arranged at the upper opening of the containment tank) or rotatably mounted on the support frame 120. According to this latter variant, the mixing head can be moved between a position in which it is arranged above the containment tank and a position in which it is raised or moved laterally to leave the upper opening of the containment tank 110 completely free.

Furthermore, the kneading machine 100 is also provided with actuator means mounted on the support frame 120 or directly on the mixing head of the mixing means 130 and mechanically connected to the whisk to operate it during the production of the dough.

Advantageously, the device 1, depending on the scope of application, may be made in different variants, in which the device 1 (and in particular its support structure 2) can be fixed to the kneading machine 100, incorporated in the kneading machine 100 or completely autonomous with respect to the kneading machine 100, as will be described in more detail below.

Of course, without departing from the scope of protection of the invention, the present device 1 (and in particular the support structure 2) can also be associated with any other machinery, processing station or conveyor line from which it is necessary to remove or extract a dough P. For example, the device 1 can be integrated into a conveying line, in particular between two conveyor belts arranged at different heights, and its support structure 2 can be integrated into a structure supporting the conveying line itself.

According to the invention, the device 1 comprises at least one first conveyor belt 3, which is mounted on the support structure 2, is provided with an extension, preferably along a first main direction D1, with at least one vertical component between a first lower end 31 and a first upper end 32 and is susceptible of being inserted at least partially with its first lower end 31 within the containment tank 110.

The device also comprises at least one second conveyor belt 4, which is mounted on the support structure 2, is provided with an extension, preferably along a second main direction D2, with at least one vertical component between a second lower end 41 and a second upper end 42 and is arranged to be inserted at least partially with the second lower end 41 thereof within the containment tank 110 and to be arranged resting on the dough P to be extracted.

Advantageously, the first main direction D1 and the second main direction D2 are arranged, with the device 1 in use, at least inclined with respect to the ground, in particular by an angle of between 1° and 90°. In particular, in the embodiment illustrated in the accompanying figures, the conveyor belts 3, 4 are arranged in a completely vertical position, i.e. orthogonal to the ground.

The first conveyor belt 3 and the second conveyor belt 4, preferably at least in operation, define between them a transport duct 5.

More in detail, the transport duct 5 extends between an inlet section 51, defined between the first lower end 31 of the first conveyor belt 3 and the second lower end 41 of the second conveyor belt 4, and an outlet section 52, defined between the first upper end 32 of the first conveyor belt 3 and the second upper end 42 of the second conveyor belt 4.

According to the embodiment illustrated in the accompanying figures, each conveyor belt 3, 4, 7, 8 comprises a corresponding closed annular belt 33, 43, 73, 83 extending between the respective lower ends 31, 41, 71, 81 and upper ends 32, 42, 72, 82 and preferably at least partially made of elastomeric material.

Furthermore, each conveyor belt 3, 4, 7, 8 is susceptible of being rotated preferably in such a way that the portion of the annular belt 33, 43, 73, 83 facing the inside of the transport duct 5 moves from the lower end 31, 41, 71, 81 towards the upper end 32, 42, 72, 82 of the corresponding conveyor belt 3, 4, 7, 8, defining a transport direction V of the dough P along the transport duct 5.

According to a further embodiment not shown, at least one of the conveyor belts 3, 4, 7, 8 comprises two or more annular belts 33, 43, 73, 83 arranged in series with each other along the respective main direction D1, D2, D3 , D4 or arranged in parallel, i.e. side by side with each other transversely with respect to the main direction D1, D2, D3, D4.

Advantageously, according to the aforementioned further embodiment, at least two of the annular belts 33, 43, 73, 83 are provided with different surface roughness to obtain a different adhesion of the dough P to be transported according to the segment of the conveyor belt 3, 4, 7, 8 on which they are arranged. Advantageously, moreover, at least two of the annular belts 33, 43, 73, 83 are susceptible of being rotated at different speeds to exert different mechanical actions, in particular cutting forces, on the dough P to be conveyed according to the segment of conveyor belt 3, 4, 7, 8 on which they are arranged.

According to the idea underlying the present invention, the second conveyor belt 4 is movable with respect to the first conveyor belt 3 in order to vary the distance between the first lower end 31 and the second lower end 41.

In this way, the second conveyor belt 4 is advantageously susceptible of selectively reducing the width of the inlet section 51 of the transport duct 5.

Advantageously, the second lower end 41 of the second conveyor belt 4 can be arranged to rest on the dough P to be extracted, in particular on the free surface of the aforementioned dough P. In particular, the second conveyor belt 4 is designed to be free to move with respect to the first conveyor belt 3, in such a way that, during the reduction of the dough P in the tank, its lower end rests on the free surface of the dough P itself. Preferably, the second conveyor belt 4 is arranged at least partially parallel to the first conveyor belt 3, in particular with the second main direction D2 parallel to the first main direction D1, and is advantageously movable in translation along a sliding direction S. Preferably, the sliding direction S is parallel to the first conveyor belt 3 and coincides with the second main direction D2.

Of course, without departing from the scope of protection of the invention, the second conveyor belt 4 can be arranged with a variable inclination with respect to the first conveyor belt 3 and be movable in rotation to modify the distance between the first and second lower ends 31, 41.

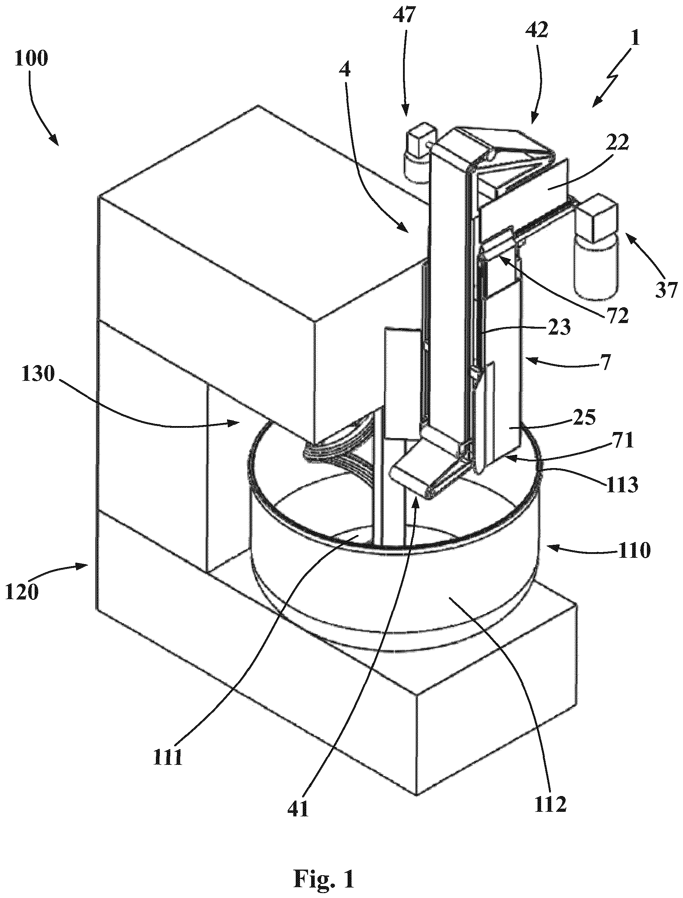

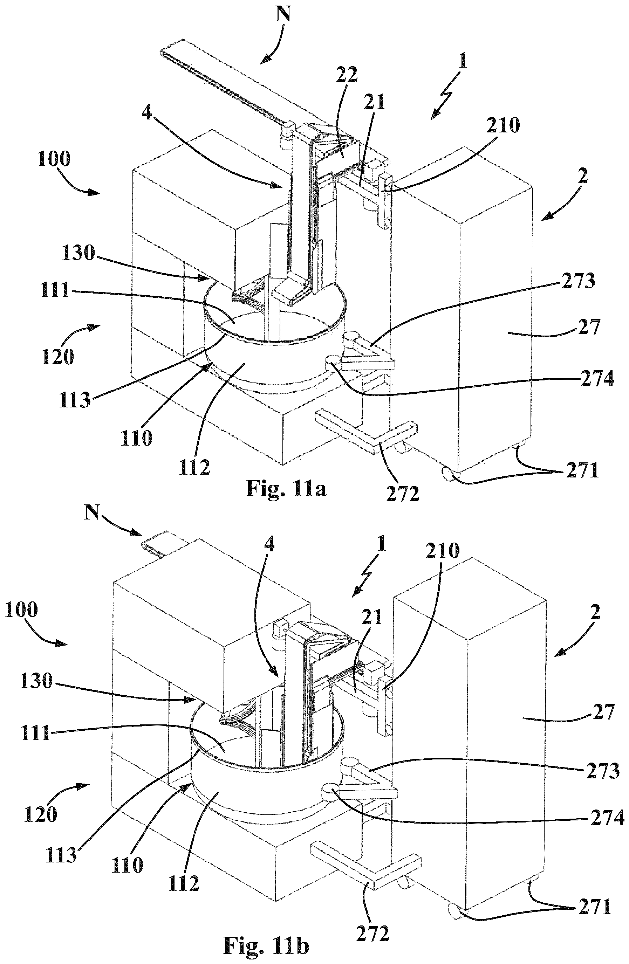

According to the invention, as far as the device is concerned, illustrated in the accompanying figures, the support structure 2 of the device 1 comprises a support arm 21 (not visible in a first variant of the arrangement illustrated in Figures 1, 2, 9a-d and 10, while it is visible in a second variant of arrangement illustrated in Figure 11a-b) advantageously susceptible of being mounted, fixed or incorporated in the kneading machine 100, or of being placed directly or indirectly on a floor, or even of being mounted or fixed on a wall or other supports. Some arrangement variants will be described in more detail below.

In particular, the support arm 21 is susceptible of being moved to bring the device 1 between an operating position and a rest position. Advantageously, in the operating position the device 1 is partially inserted, at least with the first lower end 31 of the first conveyor belt 3, into the containment tank 110 and in the rest position the device is arranged externally with respect to the aforementioned containment tank 110.

To this end, the device 1 advantageously comprises displacement means (not shown) for moving the support arm 21 and therefore bringing the device 1 between an operating position and a rest position. In particular, the displacement means may comprise a motor mounted on the support structure 2 and configured to translate or rotate the support arm 21.

Advantageously, the first conveyor belt 3 is provided with a corresponding first actuation structure 30 comprising at least two first actuation rollers 301 arranged at the first lower end 31 and the first upper end 32.

More in detail, the first actuation structure 30 is fixed to the support arm 21 and carries a first annular belt 33 rotatably mounted on the first actuation rollers 301.

In particular, the first actuation structure 30 comprises a first frame 302 which is fixed to the support arm 21 and carries the first actuation rollers 301 rotatably mounted.

Advantageously, the first conveyor belt 3 comprises a first conveying segment 34, preferably extending between the first lower end 31 and an angular portion 36 of the first conveyor belt 3 substantially along the first main direction D1, and a second conveying segment 35, inclined, preferably orthogonal, with respect to the first conveying segment 34 and preferably extending between the angular portion 36 and the first upper end 32 of the first conveyor belt 3.

More in detail, the first frame 302 of the first actuation structure 30 is L-shaped and the first actuation rollers 301 comprise at least a first deflection roller 303 mounted on the aforementioned first frame 302 at the aforementioned angular portion 36 to guide the first annular belt 33 between the first conveying segment 34 and the second conveying segment 35. Of course, without thereby departing from the scope of protection of the present invention, the first conveying segment 34 and the second conveying segment 35 may be made with separate first annular belts 33.

Advantageously, the support structure 2 further comprises two opposite lateral walls 22 fixed to the support arm 21 or to the first frame 302 of the first actuation structure 30 and arranged side by side with the second conveying segment 35 to prevent the falling of the dough P coming out of the transport duct 5.

According to an embodiment variant not shown, the side walls 22 may also be made in the form of a conveyor belt.

Advantageously, the support structure 2 further comprises a first protection element 24 mounted, preferably fixed, on the support arm 21 or on the first frame 302 and placed at least partially covering the first conveyor belt 3. In particular, the first protection element 24 is placed to shield the portion of the first annular belt 33 arranged externally with respect to the transport duct 5.

According to the preferential embodiment of the invention, the first conveyor belt 3 comprises first actuation means 37, which are preferably mounted on the first actuation structure 30 and are mechanically connected to at least one of the first actuation rollers 301 to drive it in rotation and move the first annular belt 33 of the first conveyor belt 3.

More in detail, the first actuation means 37 comprise a first actuator 370 and a first transmission device 371, placed as a connection between the first actuator 370 and the corresponding first actuation roller 301. Preferably, the first transmission device 371 is mechanically connected to the first actuation roller 301 arranged at the first upper end 32 of the first conveyor belt 3. Of course, without thereby departing from the scope of the invention, the first transmission device 371 may be mechanically connected to any other first actuation roller 301 or to any other first deflection roller 303.

According to the preferential embodiment of the invention illustrated in the accompanying figures, the second conveyor belt 4 is provided with a corresponding second actuation structure 40 comprising at least two second actuation rollers 401 arranged at the second lower end 41 and the second upper end 42.

More in detail, the second actuation structure 40 is slidably mounted, preferably indirectly, on the support arm 21 and carries a second annular belt 43 rotatably mounted on the second actuation rollers 401.

In particular, the second actuation structure 40 comprises a second frame 402 which is slidably mounted, preferably indirectly, on the support arm 21 and carries the second actuation rollers 401 rotatably mounted.

Advantageously, the support structure 2 comprises at least one linear guide 23 extending, between a lower limit switch 231 and an upper limit switch 232, along the sliding direction S and carrying the second conveyor belt 4 slidably mounted. More in detail, the support structure 2 comprises two opposite linear guides 23, which are arranged side by side with the second conveyor belt 4.

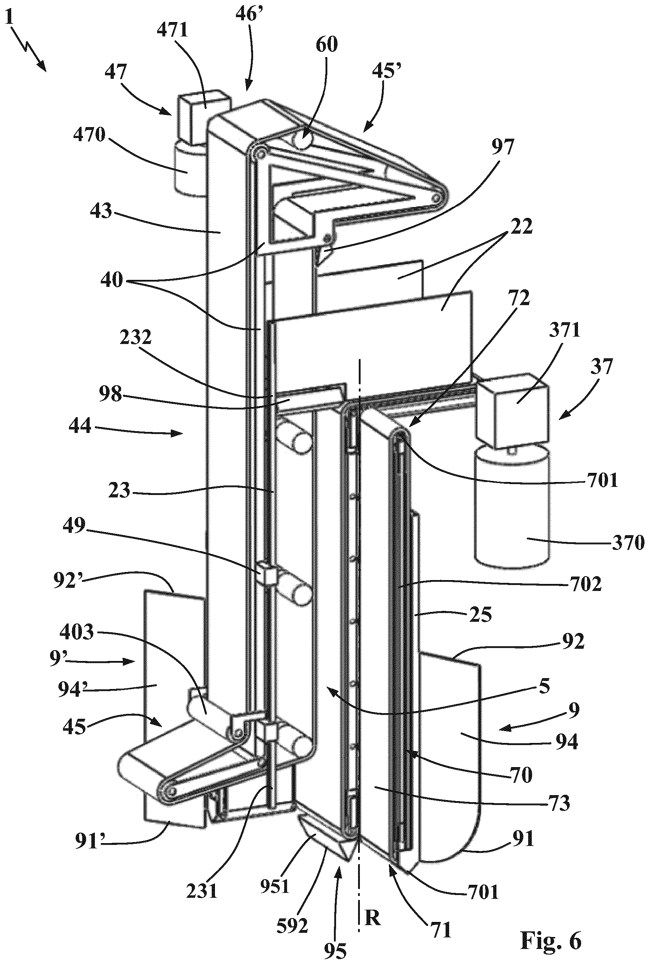

According to a first embodiment variant, illustrated in Figure 6, the linear guides 23 are mounted, preferably fixed, each on a respective side wall 22 of the support structure 2.

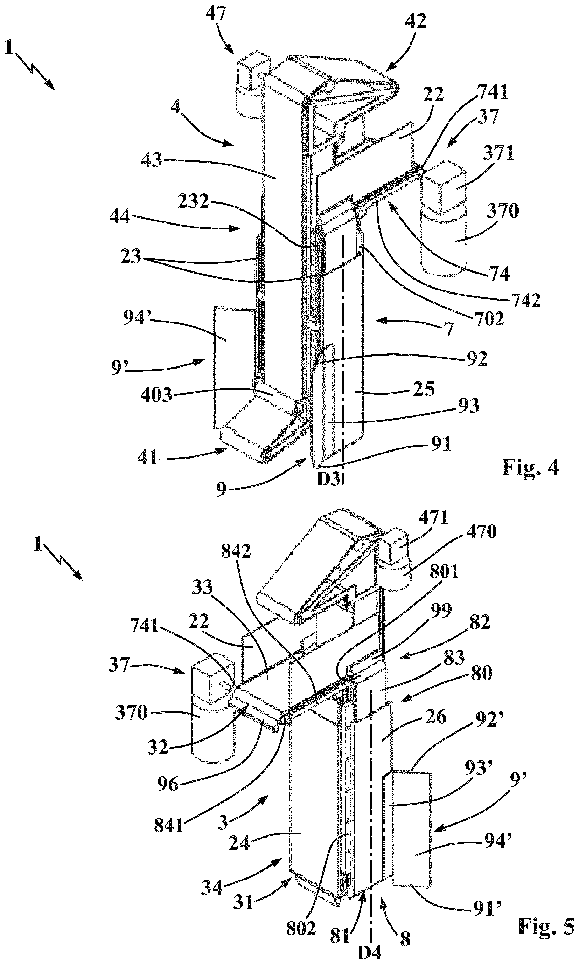

According to a second embodiment variant, illustrated in Figure 4, the linear guides 23 are mounted, preferably fixed, respectively on a third frame 702 of a third conveyor belt 7 and a fourth frame 802 of a fourth conveyor belt 8, which will be described in more detail below.

According to a third variant embodiment, not shown, the linear guides 23 are mounted, preferably fixed, on the first frame 302 of the first conveyor belt 3, preferably at the first conveying segment 34.

Advantageously, the second conveyor belt 4 comprises at least one shoe 49 slidably mounted on the linear guide 23, preferably at least one for each linear guide 23. In particular, according to the preferential embodiment illustrated in the accompanying figures, the second conveyor belt 4 comprises two shoes for each side 49.

Preferably, each shoe 49 is fixed laterally on the second frame 402 of the second actuation means 40 of the second conveyor belt 4, preferably at a first transport segment 44 which will be described in more detail below.

In particular, the shoes 49 are capable of sliding freely along the linear guides 23 and are limited in sliding by the respective lower limit switch 231 and upper limit switch 232.

Operationally, when the device 1 is arranged in the rest position outside the containment tank 110 of the kneading machine 100, the second conveyor belt 4 is arranged to rest with the relative shoes 49 on the lower limit switches 231 of the linear guides 23. On the other hand, when the device 1 is inserted in the operating position inside the containment tank 110, the second conveyor belt 4 rests on the dough P and is pushed by the latter to slide along the sliding direction S against its weight force. Advantageously, the second conveyor belt 4 stops running when the first conveyor belt 3 has substantially reached the bottom wall 111 of the containment tank 110 (if the level of the dough P is less than the length that can be traveled by the linear guides 23), or when the shoes 49 reach the upper limit switches 232 of the linear guides 23 (if the level of the dough P is greater than the length that can be traveled by the linear guides 23).

As the dough P is removed (and therefore the distance of its free surface with respect to the bottom wall 111 decreases) the second conveyor belt 4 follows by gravity the descent of the free surface of the dough P, simultaneously reducing the distance between the first lower end 31 of the first conveyor belt 3 and the second lower end 41 of the second conveyor belt 4.

In this way, the extraction of the dough P is faster. In particular, the sliding of the second conveyor belt 4 allows reducing the path that the dough P must travel in order to be moved out of the containment tank 110, since the dough P closest to the free surface is the one intended to be extracted first.

Furthermore, the efficiency of the extraction of the dough P is advantageously kept substantially constant over time, even at the end of the extraction, since the sliding of the second conveyor belt 4 allows it to be kept constantly in contact with the dough P.

Of course, the second conveyor belt 4 may also be suitably provided with handling means for mechanically controlling the sliding thereof, in particular for forcing the second conveyor belt 4 to act against the dough P. For example, such handling means may comprise a motor mounted on the second conveyor belt 4 and at least one pinion connected to the motor. Furthermore, the linear guides 23 may comprise at least one rack to which the aforementioned pinion is engaged to selectively move the second conveyor belt 4 along the linear guide 23.

Alternatively, the aforesaid handling means may comprise an elastic loading element, for example a spring, susceptible of constantly pushing the second conveyor belt 4 against the lower limit switch 231 of the linear guide 23.

Advantageously, the second conveyor belt 4 comprises a first transport segment 44, arranged substantially parallel to the first conveyor belt 3, preferably along the second main direction D2, and a second transport segment 45, inclined with respect to the first transport segment 44 and extending between the second lower end 41 and a first deflection portion 46 arranged between the first transport segment 44 and the second transport segment 45.

More in detail, the second actuation rollers 401 comprise at least a second deflection roller 403 mounted on the second frame 402 at the aforementioned first deflection portion 46 to guide the second annular belt 43 between the first transport segment 44 and the second transport segment 45. Of course, without departing from the scope of protection of the present invention, the first transport segment 44 and the second transport segment 45 may be made with separate second annular belts 43, for example made with different surface roughness and/or susceptible of being operated with different speeds.

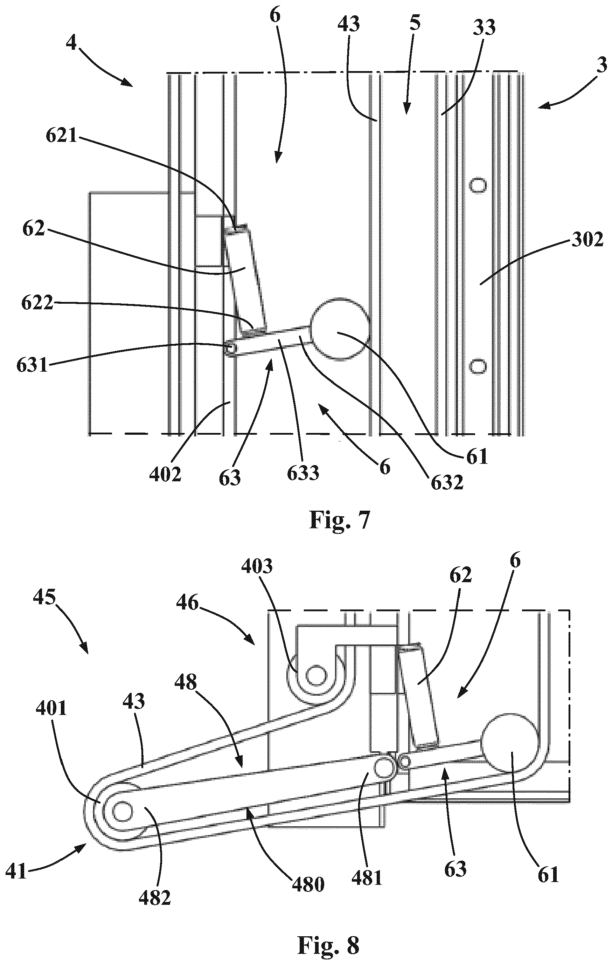

According to the preferential embodiment illustrated in Figure 8, the second conveyor belt 4 comprises tilt adjustment means 48, which act on the second transport segment 45 to vary the tilt of the second transport segment 45 with respect to the first transport segment 44.

More in detail, the tilt adjustment means 48 comprise a tilt arm 480 rotatably mounted on the second frame 402. In particular, the tilt arm 480 extends between a hinging portion 481, hinged to the second frame 402 at the first deflection portion 46, and a support portion 482, bearing mounted the second actuation roller 401 arranged at the second lower end 41 of the second conveyor belt 4.

Advantageously, the tilt arm 480 is susceptible of rotating freely and is limited in rotation by the tensioning of the second annular belt 4 and/or by the second deflection rollers 403 and/or by respective limit switches.

Operationally, when the device 1 is in the rest position, the tilt arm 480 is in a first position with a minor tilt, in which the tilt is understood as the acute angle measured with respect to the first transport segment 44 of the second conveyor belt 4. When the device 1 is brought into the operating position and the second lower end 41 of the second conveyor belt 4 comes into contact with the dough P, the second transport segment 45 is pushed by the latter towards a second position with greater tilt.

Of course, the tilt adjustment means 48 may also be suitably provided with an actuator for mechanically controlling the rotation of the tilt arm 480, in particular for forcing the tilt arm 480 towards the first position. For example, such handling means may comprise a piston mechanically connected to the second frame 402 and to the tilt arm 480.

Alternatively, the aforesaid tilt adjustment means 48 may comprise an elastic loading element, for example a spring, susceptible of constantly pushing the tilt arm 480 towards the first position.

Advantageously, the second conveyor belt 4 is also provided with a third transport segment 45', extending between the second upper end 42 and a second deflection portion 46' and inclined with respect to the first transport segment 44. In particular, the second actuation rollers 401 comprise at least a further second deflection roller 403' mounted on the second frame 402 at the aforementioned second deflection portion 46' to guide the second annular belt 43 between the first transport segment 44 and the third transport segment 45.

Although not illustrated in the accompanying figures, the support structure 2 may further comprise a second protection element mounted, preferably fixed, on the second frame 402 and placed at least partially covering the second conveyor belt 4. In particular, the second protection element is placed to shield the portion of the second annular belt 43 arranged externally with respect to the transport duct 5.

According to the preferential embodiment of the invention, the second conveyor belt 4 comprises second actuation means 47, which are preferably mounted on the second actuation structure 40 and are mechanically connected to at least one of the second actuation rollers 401 to drive it in rotation and move the second annular belt 43 of the second conveyor belt 4.

More in detail, the second actuation means 47 comprise a second actuator 470 and a second transmission device 471, placed as a connection between the second actuator 470 and the corresponding second actuation roller 401. Preferably, the second transmission device 471 is mechanically connected to a second deflection roller 403' arranged at the second deflection portion 46' of the second conveyor belt 4. Of course, without thereby departing from the scope of the invention, the second transmission device 471 may be mechanically connected to any other second actuation roller 401 or to any other second deflection roller 403.

According to a different embodiment variant not shown, the first and second actuation means 37, 47 may be provided only with the first actuator 370 and the second transmission device 471 may be mechanically connected to the first actuator 370 itself. In this case, the second transmission device 471 may conveniently provide for example a chain or a transmission belt capable of transmitting motion to the corresponding actuation roller 401 even during the movement of the second conveyor belt 4 with respect to the first conveyor belt 3.

Advantageously, the device 1 comprises at least a third conveyor belt 7, which is mounted on the support structure 2, extends, preferably along a third main direction D3, between a third lower end 71 and a third upper end 72 and is susceptible of being inserted at least partially with its third lower end 71 inside the containment tank 110.

Advantageously, the third conveyor belt 7 defines the transport duct 5 together with the first conveyor belt 3 and the second conveyor belt 4.

More in detail, the third conveyor belt 7 is arranged adjacent to the first conveyor belt 3 and is advantageously integral with the latter.

Advantageously, the third conveyor belt 7 is provided with a corresponding third actuation structure 70 comprising at least two third actuation rollers 701 arranged at the third lower end 71 and the third upper end 72.

More in detail, the third actuation structure 70 is mounted, preferably indirectly, on the support arm 21 and carries a third annular belt 73 rotatably mounted on the third actuation rollers 701. In particular, the third actuation structure 70 comprises a third frame 702 which is mechanically connected to the first frame 302 of the first conveyor belt 3 and carries the third actuation rollers 701 rotatably mounted.

Advantageously, the support structure 2 further comprises a third protection element 25 mounted, preferably fixed, on the third frame 702 and placed at least partially covering the third conveyor belt 7. In particular, the third protection element 25 is placed to shield the portion of the third annular belt 73 arranged externally with respect to the transport duct 5.

According to the preferential embodiment of the invention, the third conveyor belt 7 comprises third actuation means 74, which are preferably mounted on the first actuation structure 30 or on the third actuation structure 70 and are mechanically connected to at least one of the third actuation rollers 701 to drive it in rotation and move the third annular belt 73 of the third conveyor belt 7.

More in detail, the third actuation means 74 comprise a third transmission device 741, placed as a connection between the first actuator 370 and the corresponding third actuation roller 701. Preferably, the third transmission device 741 is mechanically connected to the third actuation roller 701 arranged at the third upper end 72 of the third conveyor belt 7.

Advantageously, the third transmission device 741 comprises a first transmission shaft 742 arranged in a mechanical connection between the first transmission device 371 and the corresponding third actuation roller 701.

Of course, without thereby departing from the scope of the invention, the third transmission device 741 may be mechanically connected to any other third actuation roller 701. Furthermore, the third actuation means 74 may comprise their own independent third actuator connected by means of the third transmission device 741 to the third actuation roller 701.

Advantageously, at least one of the first, second and third conveyor belts 3, 4, 7 is rotatably mounted, preferably at least indirectly, on the support structure along a rotation axis R and can be moved between a closed position, in which it closes from one side the transport channel 5, and an open position distal to said closed position to allow inspection of said transport duct 5.

According to the preferential embodiment illustrated in Figure 6, the third conveyor belt 7, and in particular the third actuation structure 70 thereof, is rotatably mounted, preferably indirectly, on the support structure 2 of the device 1.

More in detail, the third frame 702 of the third actuation structure 70 is hinged to the first frame 302 of the first conveyor belt 3. Furthermore, the device 1 comprises locking means (not shown) for keeping the third conveyor belt 7 in the closed position when the device 1 is in operation.

In this way, it is possible to inspect the transport duct 5 and perform maintenance on the conveyor belts 3, 4, 7 when the device is not in use.

Advantageously, the device 1 comprises at least a fourth conveyor belt 8, which is mounted on the support structure 2, extends, preferably along a fourth main direction D4, between a fourth lower end 81 and a fourth upper end 82 and is susceptible of being inserted at least partially with its fourth lower end 81 inside the containment tank 110.

Advantageously, the fourth conveyor belt 8 defines the transport duct 5 together with the first conveyor belt 3, the second conveyor belt 4 and the third conveyor belt 7.

More in detail, the fourth conveyor belt 8 is arranged between the first conveyor belt 3 and the second conveyor belt 4 and is opposite to the third conveyor belt 7. Furthermore, the fourth conveyor belt 8 is integral with the first conveyor belt 3.

In particular, the transport duct 5 according to the preferential embodiment has a rectangular or square section.

It is also possible that, in the absence of the fourth conveyor belt 8, the transport duct 5 has a triangular section. Furthermore, the device 1 may comprise further conveyor belts defining the transport duct 5, which may therefore be provided with a section of different shapes (for example pentagonal or hexagonal). Advantageously, the fourth conveyor belt 8 is provided with a corresponding fourth actuation structure 80 comprising at least two fourth actuation rollers 801 arranged at the fourth lower end 81 and the fourth upper end 82.

Of course, where possible, the actuation rollers 301, 401, 701, 801 of the conveyor belts 3, 4, 7, 8 described up to now can be suitably replaced in an equivalent manner by known sliding systems, for example comprising non-rotating elements but made of material suitable for limiting friction with the respective annular belt 33, 43, 73, 83 (for example Teflon).

More in detail, the fourth actuation structure 80 is mounted, preferably indirectly, on the support arm 21 and carries a fourth annular belt 83 rotatably mounted on the fourth actuation rollers 801. In particular, the fourth actuation structure 80 comprises a fourth frame 802 which is mechanically connected, preferably fixed, to the first frame 302 of the first conveyor belt 3 and carries the fourth actuation rollers 801 rotatably mounted. Advantageously, the support structure 2 further comprises a fourth protection element 26 mounted, preferably fixed, on the fourth frame 802 and placed at least partially covering the fourth conveyor belt 8. In particular, the fourth protection element 26 is placed to shield the portion of the fourth annular belt 83 arranged externally with respect to the transport duct 5.

According to the preferential embodiment of the invention, the fourth conveyor belt 8 comprises fourth actuation means 84, which are preferably mounted on the first actuation structure 30 or on the fourth actuation structure 80 and are mechanically connected to at least one of the fourth actuation rollers 801 to drive it in rotation and move the fourth annular belt 83 of the fourth conveyor belt 8.

More in detail, the fourth actuation means 84 comprise a fourth transmission device 841, placed as a connection between the first actuator 370 and the corresponding fourth actuation roller 801. Preferably, the fourth transmission device 841 is mechanically connected to the fourth actuation roller 801 arranged at the fourth upper end 82 of the fourth conveyor belt 8. Of course, without thereby departing from the scope of the invention, the fourth transmission device 841 may be mechanically connected to any other fourth actuation roller 801. Furthermore, the fourth actuation means 84 may comprise their own independent fourth actuator connected by means of the fourth transmission device 841 to the fourth actuation roller 801.

In particular, the fourth transmission device 841 comprises a second transmission shaft 842 arranged in mechanical connection between the corresponding fourth actuation roller 801 and the first actuation roller 301 arranged at the first upper end 32 of the first conveyor belt 3, which in turn is connected by means of the first transmission device 371 to the first actuator 370.

Advantageously, the transmission devices 371, 471, 741, 841 and the actuators 370, 470 of all the conveyor belts 3, 4, 7, 8 are of a known type and therefore not described in detail below.

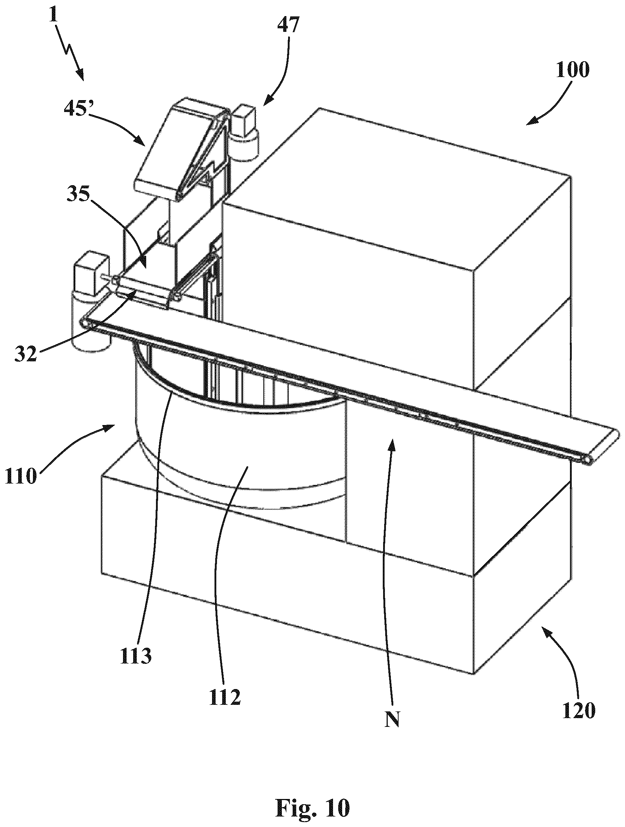

According to the embodiment illustrated in Figures 10 and 11a-b, the device may comprise a further conveyor belt N, preferably orientable or tiltable, mounted on the support structure 2 or supported by an external structure and in communication with the second conveying segment 35 of the first conveyor belt 3. In this way, it is possible to convey the dough P extracted from the kneading machine 100 onto a work table, a transport trolley, a conveyor line or other work machinery.

Advantageously, the support structure 2 comprises at least one lateral scraper 9, 9', which is extended between a corresponding lower edge 91, 91' and a corresponding upper edge 92, 92' and is susceptible of being inserted at least partially with its own corresponding lower edge 91, 91' within the containment tank 110.

Advantageously, the lateral scraper 9, 9' is placed as at least partial lateral closure of the transport duct 5, at the inlet section 51.

More in detail, the aforesaid at least one lateral scraper 9, 9' comprises at least one external scraper 9, which extends between a first lower edge 91 and a first upper edge 92 and is susceptible of being inserted at least partially with the first lower edge 91 thereof inside the containment tank 110.

Advantageously, the external scraper 9 is arranged as at least partial lateral closure of the transport duct 5, at the second transport segment 45.

More in detail, the external scraper 9 is fixed to the third protection element 25 of the support structure 2 and is susceptible of being placed in contact with the peripheral wall 112 of the containment tank 110 to improve the conveyance of the dough P in particular during the rotation of the containment tank 110. For this purpose, the external scraper 9 is advantageously provided with a first fixing portion 93, fixed to the third protection element 25, and a first guiding portion 94, extending from the first fixing portion 93 away from the second transport segment 45.

Alternatively, the external scraper 9 can be fixed, preferably with the first fixing portion 93 thereof, to the third frame 702 of the third conveyor belt 7 or to the second frame 402 of the second conveyor belt 4, advantageously at the second transport segment 45.

According to an embodiment variant not shown, the first guiding portion 94 is hinged to the first fixing portion 93 and is movable, for example by means of an actuator or suitable elastic thrust elements, so as to adapt the opening width of the first guiding potion 94 to the dimensions of the containment tank 110. Advantageously, the aforesaid at least one lateral scraper 9, 9' comprises at least one internal scraper 9', which extends between a second lower edge 91' and a second upper edge 92' and is susceptible of being inserted at least partially with the second lower edge 91' thereof inside the containment tank 110. Advantageously, the internal scraper 9' is arranged as at least partial lateral closure of the transport duct 5, at the second transport segment 45, in an opposite position with respect to the external scraper 9.

More in detail, the internal scraper 9' is fixed to the fourth protection element 26 of the support structure 2 and is susceptible of being arranged towards the center of the containment tank 110 to improve the conveyance of the dough P in particular during the rotation of the containment tank 110. For this purpose, the internal scraper 9' is advantageously provided with a second fixing portion 93', fixed to the fourth protection element 26, and a second guiding portion 94', extending from the second fixing portion 93' away from the second transport segment 45.

Alternatively, the internal scraper 9' can be fixed, preferably with the second fixing portion 93' thereof, to the fourth frame 802 of the fourth conveyor belt 8 or to the second frame 402 of the second conveyor belt 4, advantageously at the second transport segment 45, in the opposite position with respect to the external scraper 9.

According to an embodiment variant not shown, the second guiding portion 94' is hinged to the second fixing portion 93' and is movable, for example by means of an actuator or suitable elastic thrust elements, so as to adapt the opening width of the second guiding potion 94' to the dimensions of the containment tank 110.

According to the preferential embodiment illustrated in the accompanying figures, at least the first conveyor belt 3 comprises a lower scraper 95 rotatably mounted, preferably indirectly, on the support structure 2, at the first lower end 31. More in detail, the lower scraper 95 comprises a scraping surface 951 directed towards the transport duct 5 and terminating with a scraping edge 952, susceptible of abutting against the containment tank 110, in particular when the device 1 is in operating position.

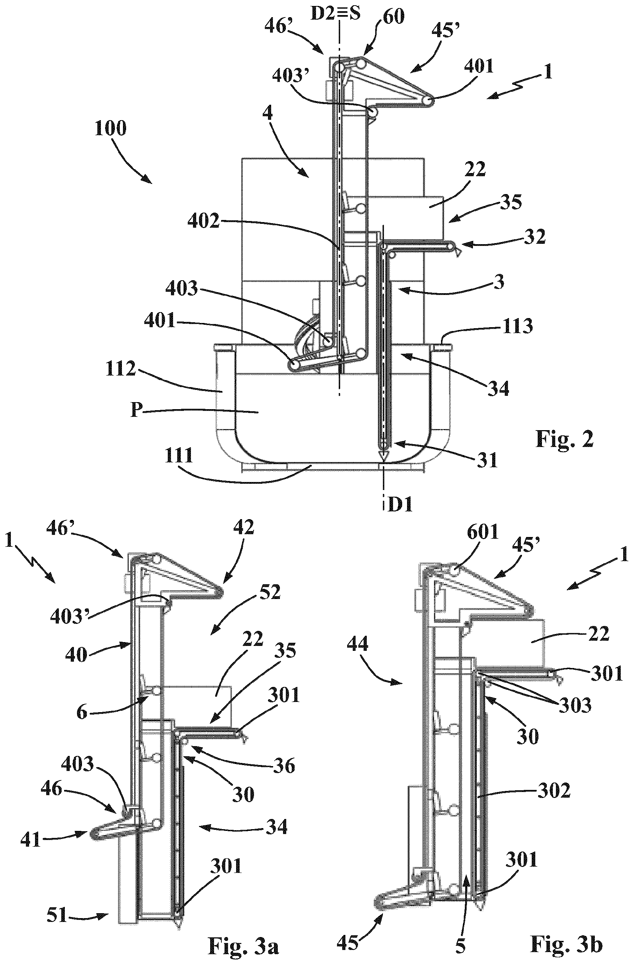

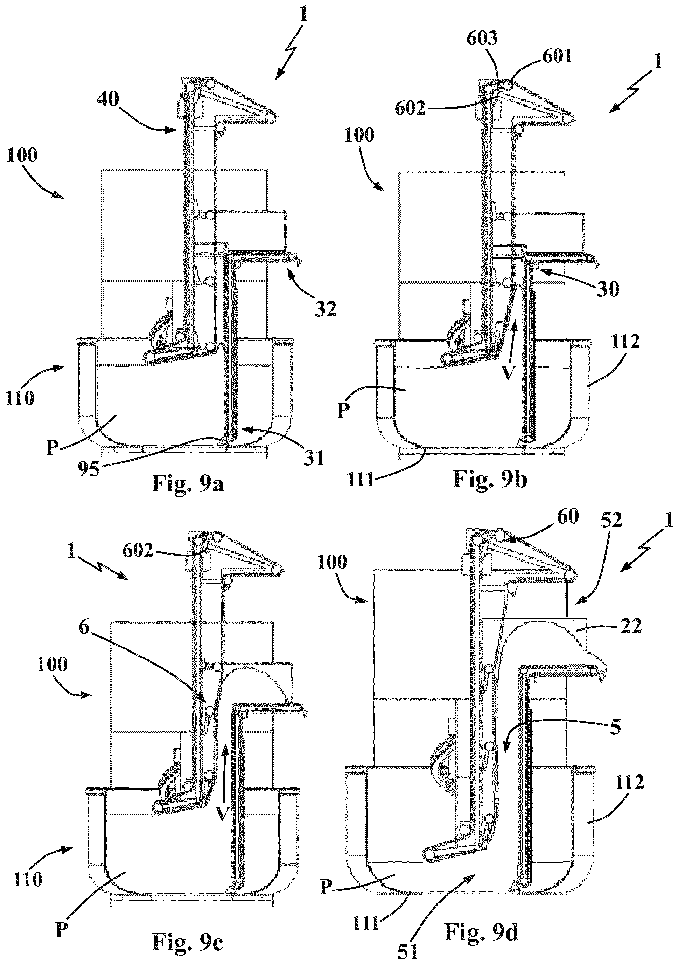

According to a first embodiment variant of the lower scraper 95 illustrated in the accompanying figures, the lower scraper 95 is rotatably mounted in an idle manner on the first frame 302, in such a way as to be movable when it comes into contact with the bottom wall 111 of the containment tank 110 and to be able to adapt to the conformation of the latter. Two particular positions of the lower scraper are illustrated for example in Figure 2 and Figure 9a-d, respectively.

According to a second embodiment variant of the lower scraper 95, not shown, the lower scraper 95 is rotatably mounted on the first frame 302 and connected to a suitable actuator to be selectively moved in rotation so as to arrange the scraping surface 951 according to different inclinations with respect to the bottom wall 111 of the containment tank 110 of the kneading machine 100.

Advantageously, each conveyor belt 3, 4, 7, 8 also comprises a corresponding upper scraper 96, 97, 98, 99 fixed to the respective frame 302, 402, 702, 802 to facilitate the detachment of the dough P exiting the transport duct. 5. In particular, the first conveyor belt 3, the third conveyor belt 7 and the fourth conveyor belt 8 comprise a corresponding first upper scraper 96, third upper scraper 98 and fourth upper scraper 99 fixed at the respective first upper end 32, third upper end 72 and fourth upper end 82. Furthermore, the second conveyor belt 4 comprises a respective second upper scraper 97 fixed at the second deflection portion 46'.

Alternatively, the third upper scraper 98 and the fourth upper scraper 99 are each mounted on a side wall 22 of the support structure 2.

Advantageously, the device comprises thrust means 6, which act on at least one segment of at least one between the first conveyor belt 3 and the second conveyor belt 4 towards the interior of the transport duct 5 and are susceptible of being thrust by the dough P transported within the transport duct 5 in order to modify at least one section of the transport duct 5 at the segment on which the aforementioned thrust means 6 act. Advantageously, the thrust means 6 comprise at least one belt tensioning element 61, mounted, in particular indirectly, on the support structure 2 and acting on the segment of the corresponding one between the first conveyor belt 3 and the second conveyor belt 4.

Preferably, the belt tensioning element 61 is a belt tensioning roller rotatably mounted, in particular indirectly, on the support structure 2.

It is also possible that the belt tensioning element 61 of the thrust means 6 is a sliding system of a known type, for example comprising a non-rotating element but made of a material suitable for limiting friction with the respective annular belt 33, 43, 73, 83 (e.g. Teflon).

Advantageously, the thrust means 6 also comprise at least one elastic element 62, which is mounted, preferably indirectly, on the support structure 2, is mechanically connected to the belt tensioning element 61 and acts on the latter to keep it abutting against the corresponding segment.

According to the preferential embodiment illustrated in the accompanying figures, the thrust means 6 act on a portion of the second annular belt 43 of the second conveyor belt 4.

More in detail, the thrust means 6 are mounted on the second actuation structure 40, preferably on the second frame 402, and are therefore integral with the second conveyor belt 4. Of course, without departing from the scope of protection of the invention, the thrust means 6 can also be mounted (exclusively or additionally) on the first conveyor belt 3, on the third conveyor belt 7 and/or on the fourth conveyor belt 8 and act therefore on the first annular belt 33, on the third annular belt 73 and/or on the fourth annular belt 83, respectively.

According to the preferred embodiment variant illustrated in Figure 7, the thrust means 6 further comprise a connection arm 63, rotatably mounted, preferably indirectly, on the support structure 2 and on which the belt tensioning element 61 is mounted. In particular, in the case in which the belt tensioning element 61 is a tensioning roller, the latter is rotatably mounted on the connection arm 63. In particular, the connection arm 63 extends between a rotation portion 631, hinged to the second frame 402, and a thrust portion 632, which carries the respective belt tensioning element 61 mounted.

Advantageously, the connection arm 63 is movable between at least one retracted position, in which it is arranged tilted by a first angle with respect to the segment of the corresponding one between the first conveyor belt 3 and the second conveyor belt 4, preferably the second conveyor belt 4 (as indicated above), and at least one extended position, in which the connection arm 63 is arranged tilted with respect to the corresponding segment by a second angle, greater than the first angle.

Preferably, the elastic element 62 of the thrust means 6 is mechanically connected to the connection arm 63 in order to push it towards the extended position.

More in detail, the elastic element 63 is an elastic spring, which extends between a first end 621 fixed to the second frame 402, in a distal position with respect to the rotation portion 631 of the connection arm 63, and a second end 622 fixed to the thrust portion 632 or to a central portion 633 of the connection arm 63, arranged between the rotation portion 631 and the thrust portion 632.

According to a different embodiment variant of the thrust means 6 not shown, the latter comprise a thrust guide, which is fixed to the second frame 402 and slidably carries a corresponding belt tensioning element 61. Furthermore, the elastic element 62 is advantageously susceptible of pushing the belt tensioning element 61 to slide along the thrust guide against the aforementioned segment of the second conveyor belt 4. Operationally, when the dough P is not yet in the transport duct 5, the connection arm 63 of the thrust means 6 is arranged to rest in the extended position, as illustrated in Figure 9a. In particular, the first conveyor belt 3 and the second conveyor belt 4 can be substantially in contact when the dough P is not yet inside the transport duct 5 (configuration not illustrated in the accompanying figures).

When the device 1 is operated, as the dough P passes through the transport duct 5, the belt tensioning elements 61 undergo, through the segment of the second annular belt 43 on which they act, an outward thrust which makes the connection arm 63 rotate from the extended position to the retracted position, as illustrated in Figure 9b-d. Therefore, at the aforementioned segment, the section of the transport duct 5 widens, while where the dough P is not present, or is present in a lower quantity, the section remains of a smaller size. This mechanism cooperates advantageously with the conveyor belts 3, 4, 7, 8 to prevent the return of the dough P towards the inlet section 51 of the transport duct 5.

Therefore, the thrust means 6 advantageously comprise a number of belt tensioning elements 61 suitable for covering the entire length of at least the first transport segment 44 of the second conveyor belt 4. In particular, these belt-tightening elements 61 are distributed equally spaced along the extension of the first transport segment 44.

Advantageously, the device 1 further comprises tensioning means 60 mounted, preferably indirectly, on the support structure 2 and even more preferably on the second frame 402 for tensioning the second annular belt 43. In particular, the tensioning means 60 comprise at least one tensioning roller 601, mounted on the second frame 402, and a tensioning spring 602 connected to the tensioning roller 601 and adapted to push it against a portion of the second annular belt 43 arranged externally of the transport duct 5. Furthermore, the tensioning device 60 advantageously comprises a tensioning arm 603, hinged to the second frame 402 and rotatably bearing the tensioning roller 601.

Of course, where possible, the tensioning rollers 601 of the tensioning means 60 can be suitably replaced in an equivalent manner by known sliding systems, for example comprising non-rotating elements but made of material suitable for limiting friction with the respective annular belt 33, 43, 73, 83 (for example Teflon).

In particular, the configuration of the tensioning spring 602 and of the tensioning arm 603 is entirely similar to the configuration of the elastic element 62 and of the connecting arm 63 of the thrust means 6 and therefore will not be described in more detail. Alternatively, the tensioning means 60 can also be of the type known in the field of the construction of conveying systems such as conveyor belts.

As shown in particular in Figure 2, the tensioning means 6 are advantageously mounted at the third transport segment 45' of the second conveyor belt 4.

Of course, the tensioning means 60 can be mounted on any other conveyor belt, even independently of the presence of the thrust means 6.

In this way, the tensioning means 60 advantageously counterbalances the loosening of the respective annular belt 43 when the thrust means 6 are pushed by the dough P passing through the transport duct 5.

According to an independent embodiment of the invention, the device 1 can comprise the aforementioned thrust means 6 regardless of whether the second conveyor belt 4 is movable (like the preferred embodiment described above) or integral in movement with respect to the first belt conveyor 3 (therefore for example if the device 1 is not provided with the linear guides 23, the shoes 49, and possibly the second actuator 470, providing a single actuator for all the conveyor belts 3, 4, 7, 8).

According to such independent embodiment, the device 1 comprises the support structure 2 susceptible of being associated with the kneading machine 100 provided with the containment tank 110 for containing a dough P and the aforementioned first conveyor belt 3 and second conveyor belt 4 defining the transport duct 5 together.

Moreover, the device 1 according to such independent embodiment comprises the thrust means 6, which act on at least one segment of at least one between the first conveyor belt 3 and the second conveyor belt 4 towards the interior of the transport duct 5 and are susceptible of being thrust by the dough P transported within the transport duct 5 in order to modify at least one section of the transport duct 5 at the above segment.

Such independent embodiment can be provided with any other feature of the preferential embodiment described up to now and therefore will not be described further below.

As previously indicated, the device 1, depending on the field of application, can be provided with different variants of arrangement with respect to the kneading machine 100.

In accordance with a first variant of arrangement with respect to the kneading machine 100, illustrated in the attached figures 1, 2, 9a-d and 10, the support structure 2 of the device 1 is intended to be fixed to the support frame 120 of the kneading machine 100 or integrated in the kneading machine 100 itself.

In particular, according to such first variant of arrangement, the support arm 21 is mounted on the kneading machine 100 and in particular on a movement guide (not shown) which allows the movement of the device 1 between the rest position and the operating position. In particular, the movement of the support arm 21 and of the device 1 is carried out by means of the displacement means, which are advantageously mounted in the kneading machine 100.

Furthermore, the actuation means 37, 47, 74, 84 of one or more conveyor belts 3, 4, 7, 8, in particular the actuators 370, 470, can be advantageously incorporated in the kneading machine 100 and the motion can be transmitted by means of the related transmission devices 371, 471, 741, 841.

According to a second variant of arrangement with respect to the kneading machine 100, illustrated in the accompanying figures 11a and 11b, the support structure 2 of the device is intended to be autonomous with respect to the kneading machine 100 and can be associated with the latter by moving the whole device 1 or part of it.

According to such second variant of arrangement, the support structure 2 of the device comprises a bearing column 27 intended to be placed on a floor or to be mounted on a wall or on a ceiling. Advantageously, the bearing column 27 carries the support arm 21 slidably mounted by means of a movement guide (not shown). For this purpose, the support arm 21 preferably comprises a carriage 210 slidingly engaged in the movement guide to allow movement of the device 1 between the rest position and the operating position. In particular, the movement of the support arm 21 and of the device 1 is carried out by means of the displacement means, which are advantageously mounted in the bearing column 27.

Advantageously, moreover, the bearing column 27, in the case in which it rests on a floor, comprises a plurality of sliding means 271, for example wheels or tracks, to allow the movement thereof, in particular for use with different kneading machines 100.

Furthermore, the support structure 2 comprises at least one centering element 272, 273, fixed to the bearing column 27, to correctly associate the device 1 to the kneading machine 100.

More in detail, the support structure 2 comprises at least one fixed centering element 272 susceptible of being arranged in abutment against the support frame 120 of the kneading machine 100. Furthermore, the support structure 2 advantageously comprises at least one movable centering element 273 susceptible of being arranged in abutment against the containment tank 110 of the kneading machine 100. In particular, the movable centering element 273 comprises at its own free end at least one rotating element 274, for example a roller or a wheel, or a sliding element made of low-friction material, susceptible of sliding along the peripheral wall 112 of the containment tank 110 to reduce any friction when the latter is rotated.

It is also possible that the rotating element 274 is mechanically connected to a motor to be set in rotation and to move the containment tank 110 in rotation.

Advantageously, the device 1 is in data connection with the kneading machine 100 so as to automatically coordinate its movement and actuation with the working cycle performed by the kneading machine 100 itself.

The present invention also relates to an assembly comprising a kneading machine 100, provided with a containment tank 110 for containing a dough P, and a device 1 for extracting a dough P, associated with the kneading machine 100. The kneading machine 100 and the device 1 are in particular of the type described heretofore and therefore may have any of the features indicated heretofore.

The present invention also relates to a process for extracting a dough P, advantageously using a device 1 of the type described up to now, the same reference numerals of which will be kept for simplicity of explanation.

According to the idea underlying the present invention, the process for extracting a dough from a kneading machine 100 comprises a step of preparing a device 1 for extracting a dough P as described above and a kneading machine 100 provided with a containment tank 110 inside which a dough P to be extracted is contained.

In particular, the kneading machine 100 and the device 1 can be arranged in one of the possible configurations and variants of arrangement previously described.

The process further comprises an insertion step, in which the first conveyor belt 3 is inserted at least partially with its first lower end 31 within the containment tank 110.

In particular, during the insertion step the device 1 is moved from the rest position to the operating position. This operation is preferably performed by translating the support arm 21 of the support structure 2 of the device 1.

Preferably, during the insertion step the first lower end 31 of the first conveyor belt 3 is inserted inside the dough P and brought close to the bottom wall 111.

Furthermore, the insertion step is continued until the lower scraper 95 comes into contact with the bottom wall 111 of the containment tank 110 and advantageously rotates to position itself with its own scraping edge 952 in contact with the containment tank 110 and with the scraping surface 951 inclined with respect to the bottom wall 111 itself.

According to the preferred embodiment, during the insertion step the third conveyor belt 7 and the fourth conveyor belt 8 are also inserted in the containment tank 110, which are integral in translation with the first conveyor belt 3.

Preferably, during the insertion step, the external scraper 9 and the internal scraper 9' are also inserted in the containment tank 110, which are only integral with the third and fourth conveyor belts 7, 8. Advantageously, the method also comprises a centering step, which can be performed before or after the insertion step and provides for positioning the external scraper 9, preferably the first guiding portion 94 of the latter, in contact with the peripheral wall 112 of the containment tank 110.

Advantageously, during the centering step the internal scraper 9', preferably the second guiding portion 94' of the latter, is positioned substantially in the center of the containment tank 110.

The method according to the invention further comprises a movement step, in which the second conveyor belt 4 is moved and placed in abutment against the dough P to be extracted.

According to the preferential embodiment of the invention, the movement step occurs at first at least partially simultaneously with the insertion step and in particular in these steps, the second conveyor belt 4 is advantageously moved together with the first conveyor belt 3 and inserted at least partially in the containment tank 110 until it comes into contact with the dough P.

In particular, when the second belt has reached the surface of the dough P, it is kept in this position by the dough P itself, while the first conveyor belt 3 is further pushed by the support arm 21 inside the dough P and towards the bottom wall 111 of the containment tank 110.

Advantageously, in the movement step the second conveyor belt 4 is brought to rest on the dough P with the second transport segment 45. In particular, during the movement step, the second lower end 41 of the second conveyor belt 4 comes into contact with the dough P and the second transport section 45 is pushed by the latter from the first position with less tilting towards the second position with greater tilting. In this way, the adhesion of the dough P to the second conveyor belt 4 increases, making the handling of the dough P more efficient.

Of course, the second conveyor belt 4 can also be kept momentarily fixed during the insertion step and the handling step can be performed subsequently with respect to the insertion step.

The process further comprises an actuation step, in which the first conveyor belt 3 and the second conveyor belt 4 are actuated to rotate, counter-rotating with respect to each other.

More in detail, in the actuation step, illustrated in Figure 9a, the first annular belt 33 and the second annular belt 43 are rotated by means of the first and second actuation means 37, 47 so that the portion of each belt annular 33, 43 facing towards the inside of the transport duct 5 moves from the respective lower end 31, 41 to the respective upper end 32, 42.

Advantageously, in the actuation step, the third conveyor belt 7 and the fourth conveyor belt 8 are also driven in rotation in the same way described above.

Advantageously, the actuation step is performed at least partially simultaneously with the insertion step. The process also comprises a transport step, in which at least part of the dough P to be extracted is transported along the transport duct 5 by the rotation of the first conveyor belt 3 and of the second conveyor belt 4, and preferably also of the third conveyor belt 7 and of the fourth conveyor belt 8.

In particular, during the transport step, the conveyor belts 3, 4, 7, 8 act mechanically on the dough P, exerting shear forces that push it inside the transport duct 5 from the inlet section 51 to the outlet section 52. Advantageously, moreover, during the transport step, the dough P acts on the thrust means 6 of the device 1 to increase the dimensions of the transport duct 5, as illustrated in the accompanying Figures 9b-d. Furthermore, once the dough P has been moved along the transport duct 5, the thrust means 6 advantageously return to the initial position, preventing the return of the dough P in the direction opposite to the direction of movement V.

Advantageously, the process also provides for a rotation step, at least partially simultaneously with the transport step, in which the containment tank 110 is rotated to bring the dough P to the inlet section 51 of the transport duct 5.

Advantageously, the handling step is carried out continuously during the transport step to keep the second conveyor belt 4 constantly resting against the dough P to be extracted.

More in detail, during the transport step the level of the dough P in the containment tank 110 drops and at the same time the second conveyor belt 4 is pushed, preferably by gravity, to remain in contact with the free surface of the dough P, sliding along the linear guides 23 in the sliding direction S.

In this way, the extraction efficiency remains advantageously constant over time, since at least a part of the device 1 is always in contact with the dough P and able to push it into the transport duct 5.

Furthermore, the process advantageously comprises an unloading step, in which the dough P is pushed out of the transport duct 5 and conveyed to a subsequent station of the working process.

The invention thus conceived therefore achieves its intended purposes.

## Claims

1. Device (1) for extracting a dough (P) from a kneading machine (100), which comprises:
- a support structure (2) susceptible of being associated with a kneading machine (100) provided with a containment tank (110) for containing a dough (P);
- at least one first conveyor belt (3), which is mounted on the support structure (2), is provided with an extension with at least one vertical component between a first lower end (31) and a first upper end (32) and is susceptible of being inserted at least partially with said first lower end (31) within said containment tank (110);
- at least one second conveyor belt (4), which is mounted on the support structure (2), is provided with an extension with at least one vertical component between a second lower end (41) and a second upper end (42) and is arranged to be inserted at least partially with said second lower end (41) within said containment tank (110) and to be arranged resting on said dough (P) to be extracted;
wherein said first conveyor belt (3) and said second conveyor belt (4) define between them a transport duct (5);
wherein the second conveyor belt (4) is movable with respect to the first conveyor belt (3) in order to vary the distance between the first lower end (31) and the second lower end (41);
**characterized in that** the support structure (2) of said device (1) comprises a support arm (21), susceptible of being moved to bring said device (1) between an operating position, in which the device (1) is partially inserted, at least with the first lower end (31) of said first conveyor belt (3), into the containment tank (110) and a rest position, in which the device (1) is placed externally with respect to said containment tank (110).

2. Device (1) for extracting a dough (P) according to claim 1, **characterized in that** it comprises thrust means (6), which act on at least one segment of at least one between said first conveyor belt (3) and said second conveyor belt (4) towards the interior of the transport duct (5) and are susceptible of being thrust by the dough (P) transported within the transport duct (5) in order to modify at least one section of said transport duct (5) at said segment.

3. Device (1) for extracting a dough (P) according to claim 2, **characterized in that** said thrust means (6) comprise:
- at least one belt tensioning element (61) mounted on said support structure (2) and acting on the segment of said at least one between said first conveyor belt (3) and said second conveyor belt (4);
- at least one elastic element (62), which is mounted on said support structure (2), is mechanically connected to said belt tensioning element (61) and acts on said belt tensioning element (61) in order to maintain it in abutment against said segment.

4. Device (1) for extracting a dough (P) according to claim 3, **characterized in that** said thrust means (6) also comprise a connection arm (63) rotatably mounted on said support structure (2) and on which said belt tensioning element (61) is mounted; said connection arm (63) being movable between:
- at least one retracted position, in which said connection arm (63) is placed tilted with a first angle with respect to the segment of said at least one between said first conveyor belt (3) and said second conveyor belt (4); and
- at least one extended position, in which said connection arm (63) is placed tilted with respect to the segment of said at least one between said first conveyor belt (3) and said second conveyor belt (4) with a second angle, greater than said first angle;
the elastic element (62) of said thrust means (6) being mechanically connected to said connection arm (63) in order to push it towards said extended position.

5. Device (1) for extracting a dough (P) according to any one of the preceding claims, **characterized in that** it comprises a third conveyor belt (7), which is mounted on the support structure (2), is extended between a third lower end (71) and a third upper end (72) and is susceptible of being inserted at least partially with said third lower end (71) within said containment tank (110);
said third conveyor belt (7) defining said transport duct (5) together with said first conveyor belt (3) and said second conveyor belt (4).

6. Device (1) for extracting a dough (P) according to any one of the preceding claims, **characterized in that** at least one from among said first, second and third conveyor belts (3, 4, 7) is rotatably mounted on said support structure (2) along a rotation axis (R) and is movable between a closed position, in which said at least one between said first, second and third conveyor belt (3, 4, 7) closes on one side said transport channel (5), and an open position distal from said closed position in order to allow inspecting said transport duct (5).

7. Device (1) for extracting a dough (P) according to any one of the preceding claims, **characterized in that** said second conveyor belt (4) comprises a first transport segment (44), placed substantially parallel to said first conveyor belt (3), and a second transport segment (45), tilted with respect to said first transport segment (44) and extended between said second lower end (41) and a first deflection portion (46) placed between said first transport segment (44) and said second transport segment (45).

8. Device (1) for extracting a dough (P) according to claim 7, **characterized in that** said second conveyor belt (4) comprises tilt adjustment means (48), which act on the second transport segment (45) of said second conveyor belt (4) in order to vary the tilt of said second transport segment (45) with respect to said first transport segment (44).

9. Device (1) for extracting a dough (P) according to any one of the preceding claims, **characterized in that** said support structure (2) comprises at least one lateral scraper (9, 9'), which is extended between a corresponding lower edge (91, 91') and a corresponding upper edge (92, 92') and is susceptible of being inserted at least partially with said corresponding lower edge (91, 91') within said containment tank (110);
said at least one lateral scraper (9, 9') being placed as an at least partial lateral closure of said transport duct (5), at said inlet section (51).

10. Device (1) for extracting a dough (P) according to any one of the preceding claims, **characterized in that** at least said first conveyor belt (3) comprises a lower scraper (95) rotatably mounted on the support structure (2) at the first lower end (31);
said lower scraper (95) comprising a scraping surface (951) directed towards said transport duct (5) and terminating with a scraping edge (952), susceptible of abutting against said containment tank (110).

11. Assembly comprising:
- a kneading machine (100), provided with a containment tank (110) for containing a dough (P), and
- a device (1) for extracting a dough (P), associated with said kneading machine (100) and comprising:
- a support structure (2) associated with said kneading machine (100);
- at least one first conveyor belt (3), which is mounted on the support structure (2), is provided with an extension with at least one vertical component between a first lower end (31) and a first upper end (32) and is susceptible of being inserted at least partially with said first lower end (31) within said containment tank (110);
wherein said device (1) also comprises at least one second conveyor belt (4), which is mounted on the support structure (2), is provided with an extension with at least one vertical component between a second lower end (41) and a second upper end (42) and is arranged to be inserted at least partially with said second lower end (41) within said containment tank (110) and to be arranged resting on said dough (P) to be extracted;
wherein said first conveyor belt (3) and said second conveyor belt (4) define between them a transport duct (5);
wherein the second conveyor belt (4) is movable with respect to the first conveyor belt (3) in order to vary the distance between the first lower end (31) and the second lower end (41).

12. Process for extracting a dough (P) from a kneading machine (100), **characterized in that** it comprises:
- a step of arranging:
- a kneading machine (100) provided with a containment tank (110) at whose interior a dough to be extracted (P) is contained;
- a device (1) for extracting a dough (P) from said kneading machine (100), which comprises:
- a support structure (2) susceptible of being associated with said kneading machine (100);
- at least one first conveyor belt (3), which is mounted on the support structure (2), is provided with an extension with at least one vertical component between a first lower end (31) and a first upper end (32) and is susceptible of being inserted at least partially with said first lower end (31) within said containment tank (110);
- at least one second conveyor belt (4), which is mounted on the support structure (2), is provided with an extension with at least one vertical component between a second lower end (41) and a second upper end (42) and is arranged to be inserted at least partially with said second lower end (41) within said containment tank (110) and to be arranged resting on said dough (P) to be extracted;
wherein said first conveyor belt (3) and said second conveyor belt (4) define between them a transport duct (5);
wherein the second conveyor belt (4) is movable with respect to the first conveyor belt (3) in order to vary the distance between the first lower end (31) and the second lower end (41);
- an insertion step, in which said first conveyor belt (3) is inserted at least partially with said first lower end (31) within said containment tank (110);
- a movement step, in which said second conveyor belt (4) is moved and placed in abutment against said dough (P) to be extracted;
- an actuation step, in which said first conveyor belt (3) and said second conveyor belt (4) are actuated to rotate, counter-rotating with respect to each other;
- a transport step, in which at least part of said dough (P) to be extracted is transported along said transport duct (5) by the rotation of said first conveyor belt (3) and said second conveyor belt (4).

13. Process for extracting a dough (P) from a kneading machine (100) according to claim 12, **characterized in that** said movement step is continuously attained during said transport step in order to maintain said second conveyor belt (4) constantly in abutment against said dough (P) to be extracted.

## Patentansprüche

1. Vorrichtung (1) zum Extrahieren eines Teigs (P) aus einer Knetmaschine (100), die Folgendes umfasst:
- eine Tragstruktur (2), die geeignet ist, mit einer Knetmaschine (100) verbunden zu werden, die mit einem Auffangbehälter (110) zum Aufnehmen eines Teigs (P) ausgestattet ist;
- mindestens ein erstes Förderband (3), das an der Tragstruktur (2) montiert, mit einem Verlauf mit mindestens einer vertikalen Komponente zwischen einem ersten unteren Ende (31) und einem ersten oberen Ende (32) versehen und geeignet ist, mindestens teilweise mit dem genannten ersten unteren Ende (31) in das Innere des genannten Auffangbehälters (110) eingeführt zu werden;
- mindestens ein zweites Förderband (4), das an der Tragstruktur (2) montiert, mit einem Verlauf mit mindestens einer vertikalen Komponente zwischen einem zweiten unteren Ende (41) und einem zweiten oberen Ende (42) versehen und darauf ausgelegt ist, mindestens teilweise mit dem genannten zweiten unteren Ende (41) in das Innere des genannten Auffangbehälters (110) eingeführt und an dem genannten zu extrahierenden Teig (P) anliegend angeordnet zu werden;
wobei das genannte erste Förderband (3) und das genannte zweite Förderband (4) zwischeneinander einen Transportkanal (5) definieren;
wobei das zweite Förderband (4) im Verhältnis zum ersten Förderband (3) beweglich ist, um den Abstand zwischen dem ersten unteren Ende (31) und dem zweiten unteren Ende (41) zu variieren;
**dadurch gekennzeichnet, dass** die Tragstruktur (2) der genannten Vorrichtung (1) einen Tragarm (21) umfasst, der geeignet ist, bewegt zu werden, um die genannte Vorrichtung (1) zwischen einer Betriebsposition, in der die Vorrichtung (1), mindestens mit dem ersten unteren Ende (31) des genannten ersten Förderbands (3), teilweise in den Auffangbehälter (110) eingeführt ist, und einer Ruheposition, in der die Vorrichtung (1) im Verhältnis zu dem genannten Auffangbehälter (110) außen positioniert ist, zu tragen.

2. Vorrichtung (1) zum Extrahieren eines Teigs (P) nach Anspruch 1, **dadurch gekennzeichnet, dass** sie Schubelemente (6) umfasst, die auf mindestens einen Abschnitt des genannten ersten Förderbands (3) bzw. des genannten zweiten Förderbands (4) zur Innenseite des Transportkanals (5) wirken und geeignet sind, von dem im Inneren des Transportkanals (5) beförderten Teig (P) zurückgeschoben zu werden, um mindestens einen Teil des genannten Transportkanals (5) auf dem genannten Abschnitt zu ändern.

3. Vorrichtung (1) zum Extrahieren eines Teigs (P) nach Anspruch 2, **dadurch gekennzeichnet, dass** die genannten Schubelemente (6) Folgendes umfassen:
- mindestens ein Bandspannelement (61), das auf der genannten Tragstruktur (2) montiert ist und auf den genannten mindestens einen Abschnitt des genannten ersten Förderbands (3) bzw. des genannten zweiten Förderbands (4) wirkt;
- mindestens ein Federelement (62), das auf der genannten Tragstruktur (2) montiert, mechanisch mit dem genannten Bandspannelement (61) verbunden ist und auf das genannte Bandspannelement (61) wirkt, um es gegen den genannten Abschnitt anschlagend zu halten.

4. Vorrichtung (1) zum Extrahieren eines Teigs (P) nach Anspruch 3, **dadurch gekennzeichnet, dass** die genannten Schubelemente (6) außerdem einen drehbar auf der genannten Tragstruktur (2) montierten Verbindungsarm (63) umfassen, auf dem das genannte Bandspannelement (61) montiert ist; wobei der genannte Verbindungsarm (63) beweglich ist zwischen:
- mindestens einer zurückgezogenen Position, in der der genannte Verbindungsarm (63) geneigt mit einem ersten Winkel im Verhältnis zu dem genannten mindestens Abschnitt des genannten ersten Förderbands (3) bzw. des genannten zweiten Förderbands (4) angeordnet ist; und
- mindestens einer ausgefahrenen Position, in der der genannte Verbindungsarm (63) im Verhältnis zu dem genannten mindestens einen Abschnitt des genannten ersten Förderbands (3) bzw. des genannten zweiten Förderbands (4) mit einem im Verhältnis zu dem genannten ersten Winkel größeren Winkel angeordnet ist;
wobei das Federelement (62) der genannten Schubelemente (6) mechanisch mit dem genannten Verbindungsarm (63) verbunden ist, um ihn in die genannte ausgefahrene Position zu schieben.

5. Vorrichtung (1) zum Extrahieren eines Teigs (P) nach einem beliebigen der vorangegangenen Ansprüche, **dadurch gekennzeichnet, dass** es ein drittes Förderband (7) umfasst, das auf der Tragstruktur (2) montiert ist, zwischen einem dritten unteren Ende (71) und einem dritten oberen Ende (72) verläuft und geeignet ist, mindestens teilweise mit dem genannten dritten unteren Ende (71) in das Innere des genannten Auffangbehälters (110) eingeführt zu werden;
wobei das genannte dritte Förderband (7) den genannten Transportkanal (5) zusammen mit dem genannten ersten Förderband (3) und dem genannten zweiten Förderband (4) definiert.

6. Vorrichtung (1) zum Extrahieren eines Teigs (P) nach einem beliebigen der vorangegangenen Ansprüche, **dadurch gekennzeichnet, dass** mindestens eines der genannten ersten, zweiten und dritten Förderbänder (3, 4, 7) drehbar auf der genannten Tragstruktur (2) entlang einer Rotationsachse (R) montiert ist und zwischen einer geschlossenen Position, in der das genannte mindestens eine der genannten ersten, zweiten und dritten Förderbänder (3, 4, 7) den Transportkanal (5) von einer Seite schließt, und einer im Verhältnis zu der genannten geschlossenen Position distalen geöffneten Position, um die Inspektion des genannten Transportkanals (5) zu gestatten, bewegt werden kann.

7. Vorrichtung (1) zum Extrahieren eines Teigs (P) nach einem beliebigen der vorangegangenen Ansprüche, **dadurch gekennzeichnet, dass** das genannte zweite Förderband (4) einen ersten Transportabschnitt (44) umfasst, der im Wesentlichen parallel zu dem genannten ersten Förderband (3) angeordnet ist, und einen zweiten Transportabschnitt (45), der im Verhältnis zu dem genannten ersten Transportabschnitt (44) geneigt ist und zwischen dem genannten zweiten unteren Ende (41) und einem ersten Abzweigungsabschnitt (46) verläuft, der zwischen dem genannten ersten Transportabschnitt (44) und dem genannten zweiten Transportabschnitt (45) angeordnet ist.

8. Vorrichtung (1) zum Extrahieren eines Teigs (P) nach Anspruch 7, **dadurch gekennzeichnet, dass** das genannte zweite Förderband (4) Elemente zur Neigungseinstellung (48) umfasst, die auf den zweiten Transportabschnitt (45) des genannten zweiten Förderbands (4) wirken, um die Neigung des genannten zweiten Transportabschnitts (45) im Verhältnis zu dem genannten ersten Transportabschnitt (44) zu variieren.

9. Vorrichtung (1) zum Extrahieren eines Teigs (P) nach einem beliebigen der vorangegangenen Ansprüche, **dadurch gekennzeichnet, dass** die genannte Tragstruktur (2) mindestens einen seitlichen Abstreifer (9, 9') umfasst, der zwischen einem entsprechenden unteren Rand (91, 91') und einem entsprechenden oberen Rand (92, 92') verläuft und geeignet ist, mindestens teilweise mit dem genannten unteren Rand (91, 91') in das Innere des genannten Auffangbehälters (110) eingeführt zu werden;
wobei der mindestens eine seitliche Abstreifer (9, 9') an dem genannten Eingangsabschnitt (51) mindestens teilweise als seitlicher Verschluss des genannten Transportkanals (5) angeordnet ist.

10. Vorrichtung (1) zum Extrahieren eines Teigs (P) nach einem beliebigen der vorangegangenen Ansprüche, **dadurch gekennzeichnet, dass** mindestens das genannte erste Förderband (3) einen am ersten unteren Ende (31) drehbar an der Tragstruktur (2) montierten unteren Abstreifer (95) umfasst;
wobei der genannte untere Abstreifer (95) eine zu dem genannten Transportkanal (5) gerichtete Abstreiffläche (951) umfasst, die in einem Abstreifrand (952) endet, der geeignet ist, gegen den genannten Auffangbehälter (110) anzuschlagen.

11. Baugruppe, umfassend:
- eine Knetmaschine (100), die mit einem Auffangbehälter (110) zum Aufnehmen eines Teigs (P) ausgestattet ist, und
- eine Vorrichtung (1) zum Extrahieren eines Teigs (P) nach einem beliebigen der vorangegangenen Ansprüche, die mit der genannten Knetmaschine (100) verbunden ist und Folgendes umfasst:
- eine Tragstruktur (2), die mit der genannten Knetmaschine (100) verbunden ist;
- mindestens ein erstes Förderband (3), das an der Tragstruktur (2) montiert, mit einem Verlauf mit mindestens einer vertikalen Komponente zwischen einem ersten unteren Ende (31) und einem ersten oberen Ende (32) versehen und geeignet ist, mindestens teilweise mit dem genannten ersten unteren Ende (31) in das Innere des genannten Auffangbehälters (110) eingeführt zu werden;
wobei die genannte Vorrichtung (1) mindestens ein zweites Förderband (4) umfasst, das an der Tragstruktur (2) montiert, mit einem Verlauf mit mindestens einer vertikalen Komponente zwischen einem zweiten unteren Ende (41) und einem zweiten oberen Ende (42) versehen und darauf ausgelegt ist, mindestens teilweise mit dem genannten zweiten unteren Ende (41) in das Innere des genannten Auffangbehälters (110) eingeführt und an dem genannten zu extrahierenden Teig (P) anliegend angeordnet zu werden;
wobei das genannte erste Förderband (3) und das genannte zweite Förderband (4) zwischeneinander einen Transportkanal (5) definieren;
wobei das zweite Förderband (4) im Verhältnis zum ersten Förderband (3) beweglich ist, um den Abstand zwischen dem ersten unteren Ende (31) und dem zweiten unteren Ende (41) zu variieren.

12. Verfahren zum Extrahieren eines Teigs (P) aus einer Knetmaschine (100), **dadurch gekennzeichnet, dass** es Folgendes umfasst:
- einen Schritt der Vorbereitung:
- einer Knetmaschine (100), die mit einem Auffangbehälter (110) ausgestattet ist, in dessen Innerem ein zu extrahierender Teig (P) enthalten ist;
- einer Vorrichtung (1) zum Extrahieren eines Teigs (P) aus der genannten Knetmaschine (100), die Folgendes umfasst:
- eine Tragstruktur (2), die geeignet ist, mit der genannten Knetmaschine (100) verbunden zu werden;
- mindestens ein erstes Förderband (3), das an der Tragstruktur (2) montiert, mit einem Verlauf mit mindestens einer vertikalen Komponente zwischen einem ersten unteren Ende (31) und einem ersten oberen Ende (32) versehen und geeignet ist, mindestens teilweise mit dem genannten ersten unteren Ende (31) in das Innere des genannten Auffangbehälters (110) eingeführt zu werden;
- mindestens ein zweites Förderband (4), das an der Tragstruktur (2) montiert, mit einem Verlauf mit mindestens einer vertikalen Komponente zwischen einem zweiten unteren Ende (41) und einem zweiten oberen Ende (42) versehen und darauf ausgelegt ist, mindestens teilweise mit dem genannten zweiten unteren Ende (41) in das Innere des genannten Auffangbehälters (110) eingeführt und an dem genannten zu extrahierenden Teig (P) anliegend angeordnet zu werden;
wobei das genannte erste Förderband (3) und das genannte zweite Förderband (4) zwischeneinander einen Transportkanal (5) definieren;
wobei das zweite Förderband (4) im Verhältnis zum ersten Förderband (3) beweglich ist, um den Abstand zwischen dem ersten unteren Ende (31) und dem zweiten unteren Ende (41) zu variieren;
- einen Einführschritt, bei dem das genannte erste Förderband (3) mindestens teilweise mit dem genannten ersten unteren Ende (31) in das Innere des genannten Auffangbehälters (110) eingeführt wird;
- einen Bewegungsschritt, bei dem das genannte zweite Förderband (4) bewegt und an dem genannten zu extrahierenden Teig (P) anliegend angeordnet wird;
- einen Betätigungsschritt, bei dem das genannte erste Förderband (3) und das genannte zweite Förderband (4) angetrieben werden, um zueinander gegenläufig zu drehen;
- einen Beförderungsschritt, bei dem mindestens ein Teil des genannten zu extrahierenden Teigs (P) von der Rotation des genannten ersten Förderbands (3) und des genannten zweiten Förderbands (4) entlang des genannten Transportkanals (5) befördert wird.

13. Verfahren zum Extrahieren eines Teigs (P) aus einer Knetmaschine (100) nach Anspruch 12, **dadurch gekennzeichnet, dass** der genannte Bewegungsschritt während des Beförderungsschritts kontinuierlich erfolgt, um das genannte zweite Förderband (4) ständig an dem genannten zu extrahierenden Teig (P) anliegend zu halten.

## Revendications

1. Dispositif (1) d'extraction d'une pâte (P) à partir d'une machine de malaxage (100), le dispositif comprenant:
- une structure de support (2) susceptible d'être associée à une machine de malaxage (100) munie d'une cuve de confinement (110) pour contenir une pâte (P);
- au moins une première bande transporteuse (3), qui est montée sur la structure de support (2), est munie d'un développement avec au moins un composant vertical entre une première extrémité inférieure (31) et une première extrémité supérieure (32) et est susceptible d'être insérée au moins partiellement avec ladite première extrémité inférieure (31) à l'intérieure de ladite cuve de confinement (110);
- au moins une seconde bande transporteuse (4), qui est montée sur la structure de support (2), est munie d'un développement avec au moins un composant vertical entre une seconde extrémité inférieure (41) et une seconde extrémité supérieure (42) et est prédisposée pour être insérée au moins partiellement avec ladite seconde extrémité inférieure (41) à l'intérieure de ladite cuve de confinement (110) et pour être disposée en appui sur ladite pâte (P) à extraire;
dans lequel ladite première bande transporteuse (3) et ladite seconde bande transporteuse (4) définissent entre elles un conduit de transport (5);
dans lequel ladite seconde bande transporteuse (4) est mobile par rapport à ladite première bande transporteuse (3) pour changer la distance entre la première extrémité inférieure (31) et la seconde extrémité inférieure (41);
**caractérisé en ce que** la structure de support (2) dudit dispositif (1) comprend un bras de support (21), susceptible d'être mis en mouvement pour transporter ledit dispositif (1) entre une position de fonctionnement, dans laquelle le dispositif (1) est partiellement inséré, au moins avec la première extrémité inférieure (31) de ladite première bande transporteuse (3), dans la cuve de confinement (110) et une position de repos, dans laquelle le dispositif (1) est positionné à l'extérieur par rapport à ladite cuve de confinement (110).

2. Dispositif (1) d'extraction d'une pâte (P) selon la revendication 1, **caractérisé en ce qu'**il comprend des moyens de poussée (6), qui agissent sur au moins un tronçon de l'au moins une de ladite première bande transporteuse (3) et de ladite seconde bande transporteuse (4) vers la partie interne du conduit de transport (5) et sont susceptibles d'être rejetés par la pâte (P) transportée à l'intérieur du conduit de transport (5) pour changer au moins une section dudit conduit de transport (5) au niveau dudit tronçon.

3. Dispositif (1) d'extraction d'une pâte (P) selon la revendication 2, **caractérisé en ce que** lesdits moyens de poussée (6) comprennent:
- au moins un élément tendeur de bande (61) monté sur ladite structure de support (2) et qui agit sur le tronçon de ladite au moins une de ladite première bande transporteuse (3) et de ladite seconde bande transporteuse (4);
- au moins un élément élastique (62), qui est monté sur ladite structure de support (2), est relié mécaniquement audit élément tendeur de bande (61) et agit sur ledit élément tendeur de bande (61) pour le maintenir en butée contre ledit tronçon.

4. Dispositif (1) d'extraction d'une pâte (P) selon la revendication 3, **caractérisé en ce que** lesdits moyens de poussée (6) comprennent en outre un bras de liaison (63) monté de manière rotative sur ladite structure de support (2) et sur lequel ledit élément tendeur de bande (61) est monté ; ledit bras de liaison (63) étant mobile entre:
- au moins une position rétractée, dans laquelle ledit bras de liaison (63) est disposé de façon inclinée avec un premier angle par rapport au tronçon de ladite au moins une de ladite première bande transporteuse (3) et de ladite seconde bande transporteuse (4); et
- au moins une position étendue, dans laquelle ledit bras de liaison (63) est disposé de façon inclinée par rapport au tronçon de ladite au moins une de ladite première bande transporteuse (3) et de ladite seconde bande transporteuse (4) avec un second angle, supérieur par rapport audit premier angle;
l'élément élastique (62) desdits moyens de poussée (6) étant relié mécaniquement audit bras de liaison (63) pour le pousser vers ladite position étendue.

5. Dispositif (1) d'extraction d'une pâte (P) selon l'une quelconque des revendications précédentes, **caractérisé en ce qu'**il comprend une troisième bande transporteuse (7), qui est montée sur ladite structure de support (2), se développe entre une troisième extrémité inférieure (71) et une troisième extrémité supérieure (72) et est susceptible d'être insérée au moins partiellement avec ladite troisième extrémité inférieure (71) à l'intérieur de ladite cuve de confinement (110);
ladite troisième bande transporteuse (7) définissant ledit conduit de transport (5) conjointement avec ladite première bande transporteuse (3) et ladite seconde bande transporteuse (4).

6. Dispositif (1) d'extraction d'une pâte (P) selon l'une quelconque des revendications précédentes, **caractérisé en ce que** l'au moins une desdites première, seconde et troisième bandes transporteuses (3, 4, 7) est montée de manière rotative sur ladite structure de support (2) le long d'un axe de rotation (R) et peut être déplacée entre une position fermée, dans laquelle ladite au moins une desdites première, seconde et troisième bandes transporteuses (3, 4, 7) ferme d'un côté ledit canal de transport (5), et une position ouverte distale par rapport à ladite position fermée pour permettre l'inspection dudit conduit de transport (5).

7. Dispositif (1) d'extraction d'une pâte (P) selon l'une quelconque des revendications précédentes, **caractérisé en ce que** ladite seconde bande transporteuse (4) comprend un premier tronçon de transport (44), disposé sensiblement de façon parallèle à ladite première bande transporteuse (3), et un second tronçon de transport (45), incliné par rapport audit premier tronçon de transport (44) et s'étendant entre ladite seconde extrémité inférieure (41) et une première partie de déviation (46) disposée entre ledit premier tronçon de transport (44) et ledit second tronçon de transport (45).

8. Dispositif (1) d'extraction d'une pâte (P) selon la revendication 7, **caractérisé en ce que** ladite seconde bande transporteuse (4) comprend des moyens de réglage de l'inclinaison (48), qui agissent sur le second tronçon de transport (45) de ladite seconde bande transporteuse (4) pour changer l'inclinaison dudit second tronçon de transport (45) par rapport audit premier tronçon de transport (44).

9. Dispositif (1) d'extraction d'une pâte (P) selon l'une quelconque des revendications précédentes, caractérisé en ce ladite structure de support (2) comprend au moins un racleur latéral (9, 9'), qui s'étend entre un bord inférieur correspondant (91, 91') et un bord supérieur correspondant (92, 92') et est susceptible d'être inséré au moins partiellement avec ledit bord inférieur correspondant (91, 91') à l'intérieur de ladite cuve de confinement (110);
ledit au moins un racleur latéral (9, 9') étant disposé en tant que fermeture latérale au moins partielle dudit conduit de transport (5), au niveau de ladite section d'entrée (51).

10. Dispositif (1) d'extraction d'une pâte (P) selon l'une quelconque des revendications précédentes, **caractérisé en ce qu'**au moins ladite première bande transporteuse (3) comprend un racleur inférieur (95) monté de manière rotative sur la structure de support (2) au niveau de la première extrémité inférieure (31);
ledit racleur inférieur (95) comprenant une surface de raclage (951) orientée vers ledit conduit de transport (5) et se terminant par un bord de raclage (952), susceptible de venir en appui contre ladite cuve de confinement (110).

11. Ensemble comprenant:
- une machine de malaxage (100), munie d'une cuve de confinement (110) pour contenir une pâte (P), et
- un dispositif (1) d'extraction d'une pâte (P) selon l'une quelconque des revendications précédentes, associé à ladite machine de malaxage (100) et comprenant:
- une structure de support (2) associée à ladite machine de malaxage (100);
- au moins une première bande transporteuse (3), qui est montée sur la structure de support (2), est munie d'un développement avec au moins un composant vertical entre une première extrémité inférieure (31) et une première extrémité supérieure (32) et est susceptible d'être insérée au moins partiellement avec ladite première extrémité inférieure (31) à l'intérieure de ladite cuve de confinement (110);
dans lequel ledit dispositif (1) comprend en outre au moins une seconde bande transporteuse (4), qui est montée sur ladite structure de support (2), est munie d'un développement avec au moins un composant vertical entre une seconde extrémité inférieure (41) et une seconde extrémité supérieure (42) et est prédisposée pour être insérée au moins partiellement avec ladite seconde extrémité inférieure (41) à l'intérieure de ladite cuve de confinement (110) et pour être disposée en appui sur ladite pâte (P) à extraire; dans lequel ladite première bande transporteuse (3) et ladite seconde bande transporteuse (4) définissent entre elles un conduit de transport (5);
dans lequel la seconde bande transporteuse (4) est mobile par rapport à la première bande transporteuse (3) pour changer la distance entre la première extrémité inférieure (31) et la seconde extrémité inférieure (41).

12. Procédé d'extraction d'une pâte (P) à partir d'une machine de malaxage (100), **caractérisé en ce qu'**il comprend:
- une étape de prédisposition de:
- une machine de malaxage (100) munie d'une cuve de confinement (110) dans laquelle une pâte à extraire (P) est contenue ;
- un dispositif (1) d'extraction d'une pâte (P) à partir de ladite machine de malaxage (100), comprenant :
- une structure de support (2) susceptible d'être associée à ladite machine de malaxage (100);
- au moins une première bande transporteuse (3), qui est montée sur la structure de support (2), est munie d'un développement avec au moins un composant vertical entre une première extrémité inférieure (31) et une première extrémité supérieure (32) et est susceptible d'être insérée au moins partiellement avec ladite première extrémité inférieure (31) à l'intérieure de ladite cuve de confinement (110) ;
- au moins une seconde bande transporteuse (4), qui est montée sur la structure de support (2), est munie d'un développement avec au moins un composant vertical entre une seconde extrémité inférieure (41) et une seconde extrémité supérieure (42) et est prédisposée pour être insérée au moins partiellement avec ladite seconde extrémité inférieure (41) à l'intérieure de ladite cuve de confinement (110) et pour être disposée en appui sur ladite pâte (P) à extraire;
dans lequel ladite première bande transporteuse (3) et ladite seconde bande transporteuse (4) définissent entre elles un conduit de transport (5);
dans lequel ladite seconde bande transporteuse (4) est mobile par rapport à ladite première bande transporteuse (3) pour changer la distance entre la première extrémité inférieure (31) et la seconde extrémité inférieure (41);
- une étape d'insertion, dans laquelle ladite première bande transporteuse (3) est insérée au moins partiellement avec ladite première extrémité inférieure (31) à l'intérieur de ladite cuve de confinement (110);
- une étape de manutention, dans laquelle ladite seconde bande transporteuse (4) est mue et disposée en appui sur ladite pâte (P) à extraire;
- une étape d'entraînement, dans laquelle ladite première bande transporteuse (3) et ladite seconde bande transporteuse (4) sont entraînées en rotation, de manière contrarotative l'une par rapport à l'autre;
- une étape de transport, dans laquelle au moins une partie de ladite pâte (P) à extraire est transportée le long dudit conduit de transport (5) par la rotation de ladite première bande transporteuse (3) et de ladite seconde bande transporteuse (4).

13. Procédé d'extraction d'une pâte (P) à partir d'une machine de malaxage (100) selon la revendication 12, **caractérisé en ce que** ladite étape de manutention est réalisée en continu au cours de ladite étape de transport pour maintenir ladite seconde bande transporteuse (4) constamment en appui contre ladite pâte (P) à extraire.
